# EUROPEAN PATENT SPECIFICATION

(11) **EP 3 491 170 B1**
(45) Date of publication and mention of the grant of the patent: **31.08.2022**
(21) Application number: 17707429.1
(22) Date of filing: 26.01.2017
(51) Int. Cl.: C02F 103/02, C23F 11/08, C02F 5/12, C23F 11/173, C02F 5/10

(54) **CORROSION INHIBITING POLYMER COMPOSITIONS, MIXTURES, AND METHODS OF USING THE SAME**
KORROSIONSHEMMENDE POLYMERZUSAMMENSETZUNGEN, MISCHUNGEN UND VERFAHREN ZUR VERWENDUNG DAVON
COMPOSITIONS POLYMÈRES INHIBANT LA CORROSION, MÉLANGES ET LEURS PROCÉDÉS D'UTILISATION

(30) Priority: 29.07.2016 US 201662368255 P
(43) Date of publication of application: 05.06.2019
(73) Proprietor: Ecolab USA Inc., St. Paul, MN 55102 (US)
(72) Inventor: GILL, Jasbir, Naperville, Illinois 60564 (US); BANERJEE, Santanu, Pune MH 411028 (IN); CHUDOMEL, John, Aurora, Illinois 60504 (US)
(74) Representative: Godemeyer Blum Lenze Patentanwälte Partnerschaft mbB - werkpatent
(86) International application number: PCT/US2017/015072
(87) International publication number: WO 2018/022139

(56) References cited:
- WO-A1-2017/019937
- CN-A- 104 402 130
- CN-B- 104 386 854
- US-A- 4 209 398
- US-A- 4 744 949
- US-A- 5 192 447

## Description

### TECHNICAL FIELD

The present invention relates to polymer compositions and aqueous mixtures of the same for use as corrosion inhibitors. The polymer compositions herein inhibit corrosion in water containing systems in relatively low concentrations.

### BACKGROUND

Cooling systems, desalination, or other water containing systems can become less efficient or malfunction over time due to corrosion caused at least in part by impurities or "corrodents" in the water circulating through the system. Corrodents, such as salts and/or other dissolved solids, liquids, or gasses cause, accelerate, or promote corrosion of metal containments such as metal pipelines used to transport the water sources toward, into, out of, or away from a subterranean formation; metal tanks used to hold the water sources for a period of time; surfaces of water containing equipment such as heat exchangers, dishwashers, or laundry machines; and/or other metal equipment that contacts the water sources before, during, or after injection or production. Non-limiting examples of such corrodents are hydrogen sulfide, carbon dioxide, oxygen, sodium chloride, calcium chloride, and/or sulfur dioxide. Corrosion can pit, crack, erode, or otherwise degrade the surfaces of the system that contact the water. In some applications, aqueous liquids are injected into the earth and/or recovered from the earth during subterranean hydrocarbon recovery processes such as hydraulic fracturing (fracking) and tertiary oil recovery. In all these systems, asset integrity due to corrosion can be compromised which results in increased repair and maintenance costs and even premature failure of the equipment. In one or more such processes, an aqueous liquid called an "injectate" is injected into a subterranean formation. Injectates include water and entrained solids and/or solvents therein. In one or more such processes a water source called "produced water" is recovered, i.e. flows back from the subterranean formation and is collected. Produced water includes one or more of injectate, connate (native water present in the subterranean formation along with the hydrocarbon), sea water, and minor (< 5 wt.%) amounts of hydrocarbon products, which are hydrocarbon liquids or solids entrained (dispersed, emulsified, or dissolved) in the produced water. In embodiments, one or more of the injectate and the produced water includes corrodents. As a result, operators of water circulating systems, and almost all operators in the oil and gas industry, employ corrosion inhibitors to reduce internal corrosion in metal containments which are contacted by aqueous liquids containing corrodents.

Corrosion may be caused by a relatively high amount of corrodents or corrosive conditions **(*e.g.,*** high temperature or a pH below 4 or above 10). For example, sea water has a high amount of scale causing calcium ions and carbonate ions compared to freshwater in addition to total dissolved solids such as chlorides. Water containing systems utilizing sea water often undergo heavy corrosion as the sea water is thermally shocked or concentrated, and must be protected against such corrosion to last and efficiently function. Typically, at higher temperatures such as above 50 or 80 degrees Celsius and/or at higher concentrations cause by evaporation, corrosion may progress more readily. Thus, systems operating at high temperatures may undergo faster or more extensive corrosion than systems operating at ambient temperatures. Similarly, scales can deposit out of the water source onto the surfaces of the system at temperatures and higher concentration of scale forming components in the water source, which can lead to under deposit corrosion.

Typically, corrosion inhibiting agents include phosphorous containing components, such as phosphates or phosphonates. Such phosphorous containing components may not be desirable if the water is going to be discharged from the system, because phosphorous containing components can foul water sources and surfaces that come in contact with the same, often causing unwanted or harmful blooms of algae or other plant life. The algae can be responsible for microbial induced corrosion or under deposit corrosion.

Coastal or isolated areas may not have a ready supply of water having low total dissolved solids (*e.g.,* less than about 4000 ppm) for circulation through some water containing systems. Even freshwater may be recirculated through a water containing system only a limited number of times before the TDS content therein concentrates to a point where this environment can cause significant challenge to corrosion. However, replacement freshwater may not be a readily available resource. As long as water having low amounts of total dissolved solids is in relatively short supply, users of systems requiring water, such as desalination, cooling, pulp processing, ware-washing, laundry, etc., will continue to search for means of efficiently using the water sources on hand, such as high TDS (*e.g.,* over 4,000 ppm) water sources. Even soft water may also provide a highly corrosive environment the soft water may not have enough buffer capacity and/or low alkalinity, which may cause large pH swings.

Thus, there is a substantial need in the industry for polymer compositions that are free of phosphorous and that are suitable for use as corrosion inhibitors in water containing systems.

US 5 192 447 A discloses a method for inhibiting corrosion in an aqueous system by adding to the aqueous system a corrosion inhibiting mixture of a terpolymer and Zn or Zn and Mo.

### SUMMARY

A corrosion inhibiting polymer mixture is claimed in claim 1. The corrosion inhibiting polymer mixture comprises water source, 0.05 ppm to 200 ppm of a polymer composition dispersed in the water source and 0.05 ppm to 10 ppm of one or more of zinc or tin.

The polymer composition comprises a plurality of monomers, the plurality of monomers including three, four, or five monomers. The plurality monomers comprises 90 mol% to 97 mol% of a first monomer comprising a residue of one of acrylic acid, a salt thereof, or a conjugate base thereof; maleic acid, a salt thereof, or a conjugate base thereof; or methacrylic acid, a salt thereof, or a conjugate base thereof. The plurality monomers comprises 0.01 mol% to 5 mol% of a second monomer comprising a residue of one of 2-acrylamido-2-methylpropane sulfonic acid, a salt thereof, or a conjugate base thereof; maleic acid, a salt thereof, or a conjugate base thereof; methacrylic acid, a salt thereof, or a conjugate base thereof; methallyl sulfonate or sulfostyrene, wherein the second monomer is chemically different from the first monomer. The plurality monomers comprises 0.01 mol% to 5 mol% of a third monomer, the third monomer comprising a residue of one of 2-acrylamido-2-methylpropane sulfonic acid, a salt thereof, or a conjugate base thereof; itaconic acid, a salt thereof, or a conjugate base thereof; crotonic acid, a salt thereof, or a conjugate base thereof; tert-butylacrylamide; or dimethylacrylamide; and wherein the third monomer is chemically different from the first monomer and the second monomer.

A method of inhibiting corrosion in water containing systems is disclosed in claim 10. The method comprises adding 0.05 ppm to 200 ppm of a corrosion inhibiting polymer composition to a water source to form a corrosion inhibiting polymer mixture, wherein the corrosion inhibiting polymer mixture further comprises 0.05 ppm to 10 ppm of one or more of zinc or tin. The method includes applying the corrosion inhibiting polymer mixture to a water containing system.

The use of the corrosion inhibiting mixture to inhibit corrosion in a water containing system is claimed in claim 13.

### BRIEF DESCRIPTION OF THE DRAWINGS

**FIG. 1** is graph of corrosion rate versus time for various working examples.
**FIG. 2** is a graph of corrosion rate versus time for a composition of the invention recirculated in a pilot cooling tower for 14 days.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

### Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention. The materials, methods, and examples disclosed herein are illustrative only and not intended to be limiting.

As used herein, the term "*polymer composition*" means a water soluble, emulsible, or dispersible polymer of two or more interpolymerized monomeric units. Unless otherwise specified or provided by context, "polymer composition" refers to the polymer as synthesized, that is, prior to mixture in a water source as a corrosion inhibitor or another use. As used herein, the term "*monomer*" is used in context to mean an unsaturated radically polymerizable compound, a conjugate base thereof, a salt thereof (*e.g.,* carboxylate salt), or the polymerized residue thereof. Monomers may include an anionic monomer or cationic monomer. As used herein, the term "*anionic monomer*" means an unsaturated compound or polymerized residue thereof bearing an acidic group having a pKa of about 5 or less, the conjugate base thereof bearing a negative charge, or a salt thereof. As used herein, the term "*cationic monomer*" means an unsaturated compound or polymerized residue thereof bearing a positive charge, or a salt thereof.

As used herein, the term "*chemically different*" refers to chemical species having a different number of carbon atoms and/or different functionalities (*e.g.,* moieties) from another species; different isomers; or two or more such differences. For the purposes of this disclosure an acid, an ion, a conjugate base, or a salt of a chemical species is not considered chemically different from the species.

As used herein, the term "*polymer mixture*" means a polymer composition, as disclosed herein, as mixed in water, a water source, an aqueous solution, or combinations of any of the foregoing. Polymer mixtures may include a polymer dispersion, a polymer emulsion, a dissolved polymer solution, or combinations of any of the foregoing in water and/or a water source. As context dictates, the term "*mixing*" may include emulsifying, dispersing, dissolving, or otherwise adding the polymer composition to water and/or the water source. As context dictates, the term "*mixed*" may refer to an emulsified, dispersed, dissolved, or other combination of the polymer composition and water and/or the water source, or to the act of mixing as described above.

As used herein, the term "*polymer dispersion*" means a solid polymer composition substantially suspended or dissolved in water or a water based solution. The polymer dispersion is a dispersion as formed, or in the case of some applications the dispersion before circulation, during circulation, after circulation, before injection, during injection, or after injection as determined by context. Water based solutions may include one or more dissolved salts, buffers, acids, bases, surfactants, or other dissolved, dispersed, or emulsified compounds, materials, components, or combinations thereof.

As used herein, the term "*polymer emulsion*" means a liquid polymer composition substantially suspended in water and/or a water source. Emulsified polymer compositions (latices) include a continuous phase and a discontinuous phase dispersed in the continuous phase. In some embodiments, an emulsion is a microemulsion. Microemulsions are characterized as emulsions that are substantially transparent and thermodynamically stable. The polymer emulsion is an emulsion as formed, or in the case of some applications the emulsion before circulation, during circulation, after circulation, before injection, during injection, or after injection as determined by context. A polymer emulsion may include one or more dissolved salts, buffers, acids, bases, surfactants, or other dissolved, dispersed, or emulsified compounds, materials, components, or combinations thereof.

As used herein, the term "*tagging agent*" means a monomer capable of fluorescing or a derivative thereof. As used herein, the term "*tagged polymer*" means a polymer composition, as described herein, that has a tagging agent polymerized therein.

As used herein, "*corrodents*" are materials which cause, initiate, catalyze, accelerate, induce, decrease the onset time of, and/or otherwise promote the corrosion of metal in systems where the metal is contacted by a water source including the corrodent. Non-exhaustive examples of corrodents include oxygen gas, inorganic acids and bases, elemental alkali metals, manganese-based compounds, organic acids, halides, hydrogen sulfide, etc. In some embodiments, corrosive activity of corrodents are further affected by the presence of other compounds in a water source; thus, for example, low concentrations of calcium salts associated with water "hardness" are associated with greater corrosion by existing corrodents in a water source. In such embodiments, for example, a "corrodent" may be defined as a lack of calcium salts, or a low concentration of calcium salts in a water source.

As used herein, the term "*corrosion inhibitor*" is a material (*e.g.,* polymer mixture) which inhibits corrosion of one or more metals in an industrial process water source when the corrosion inhibitor and/or a composition comprising the corrosion inhibitor is added to the water source and/or is applied to a metal before, during, and/or after exposure of the metal to an industrial process water source.

As used herein, the term "*water source*" or "*industrial process water source*" means a source of water having one or more corrodents. An industrial process water source is any water source disposed within or for disposal within industrial process equipment, where contact of the water source with the equipment can cause corrosion. In embodiments, a water source includes a total dissolved solids ("TDS") content of about 200 ppm to 350,000 ppm (*e.g.,* about 550 ppm or more, about1300 ppm or more, about 2400 ppm or more, or less than about 4000 ppm) such as about 4000 ppm to 350,000 ppm; or one or more of a dissolved calcium content of about 50 ppm to 15,000 ppm (*e.g.,* about 100 ppm, about 400 ppm, or about 550 ppm) such as about 300 ppm to 15,000 ppm, a dissolved magnesium content of about 25 ppm to 30,000 ppm (*e.g.,* about 50 ppm, about 165 ppm or about 380 ppm) such as about 1000 ppm to 30,000 ppm, a dissolved potassium content of about 10 ppm to 15,000 ppm (*e.g.,* about 50 ppm) such as about 300 ppm to 15,000 ppm, a dissolved sodium content of about 100 ppm to 15,000 ppm (*e.g.,* about 200 ppm) such as about 5,000 ppm to about 100,000 ppm, a dissolved silica content of about 5 ppm to 1000 ppm such as about 10 ppm to about 1000 ppm, dissolved chloride content of about 100 ppm to about 15,000 ppm (*e.g.,* about 200 ppm, or about 600 ppm) such as about 200 ppm to about 10,000 ppm, carbonate alkalinity content of about 50 ppm to 5000 ppm (*e.g.,* about 100 ppm, about 200 ppm, or about 250 ppm) such as about 150 ppm to about 3000 ppm, a dissolved iron content of about 0.01 ppm to about 10 ppm, a dissolved manganese content of about 0.01 ppm to about 10 ppm, or a dissolved sulfate content of about 50 ppm to 20,000 ppm (*e.g.,* about 100 ppm, about 350 ppm, or about 600 ppm) such as about 2000 to about 15,000 ppm. As used herein "*TDS*" refers to the total amount of non-polymeric minerals, salts, metals, anions, and cations dissolved in a given volume of water. Some water sources may include soft water, municipal water, balanced water, high-chloride/sulfate water, well water, produced water, surface water, connate, waste water such as runoff water, "gray" water, treated or partially treated waste water, brackish water, sea water, or a combination of two or more such water sources as determined by context. In some embodiments, a water source includes one or more salts, ions, buffers, acids, bases, surfactants, or other dissolved, dispersed, or emulsified compounds, materials, components, or combinations thereof. In some such embodiments, the total dissolved solids are substantially non-polymeric solids. In some such embodiments, the dissolved solids comprise, consist essentially of ionic compounds. In some examples, and as determined by context, the term "*water source*" may include high TDS water sources (*e.g.,* water sources having a TDS content above about 4000 ppm such as seawater, connate, produced water, or brackish water) and/or high temperature (*e.g.,* 40 degrees Celsius and above) water. A "*water source*" may alternatively or additionally include fresh water such as tap water, distilled water, soft water, balanced water, high-chloride/sulfate water, or any other low TDS water (*e.g.,* water having a TDS below about 4000 ppm). In some embodiments, the low TDS water is, was, or will be concentrated to contain the high TDS content disclosed above for a high TDS water source. For example, fresh water having a relatively low TDS content may be used in a cooling system having a cooling tower, wherein the relatively low TDS content of the fresh water is inherently corrosive and may also become increasingly concentrated over time due to evaporation of water on the cooling tower.

As used herein, the term "*soft water*" refers to a water source having a total dissolved solids content of about 100 ppm to about 1000 ppm such as about 100 ppm to about 550 ppm, or 400 ppm to about 700 ppm, or about 550 ppm; a calcium content of 10 ppm to about 150 ppm such as about 10 ppm to about 100 ppm; a magnesium content of about 10 ppm to about 100 ppm such as about 10 ppm to about 50 ppm; a carbonate alkalinity content of about 50 ppm to 150 ppm such as about 50 ppm to about 100 ppm; a chloride content of about 10 ppm to about 300 ppm such as about 10 ppm to about 200 ppm; a sulfate content of about 10 ppm to about 200 ppm such as about 50 ppm to about 100 ppm; and a pH between about 7.5 and about 8.2 such as about 8.2. Further dissolved solids (*e.g.,* sodium, potassium, etc.) may be present in the soft water, which may increase the TDS content of soft water disclosed above.

As used herein, the term "*balanced water*" refers to a water source having a total dissolved solids content of about 450 ppm to about 1800 ppm such as about 800 ppm to about 1600 ppm or about 1365 ppm; a calcium content of 100 ppm to about 500 ppm such as about 100 ppm to about 400 ppm; a magnesium content of about 50 ppm to about 250 ppm such as about 50 ppm to about 165 ppm; a carbonate alkalinity content of about 100 ppm to 350 ppm such as about 100 ppm to about 250 ppm; a chloride content of about 50 ppm to about 400 ppm such as about 100 ppm to about 200 ppm; a sulfate content of about 150 ppm to about 350 ppm such as about 350 ppm; and a pH between about 8.0 and about 8.8 such as about 8.5 to about 8.8. Further dissolved solids (*e.g.,* sodium, potassium, etc.) may be present in the balanced water, which may increase the TDS content of the balanced water disclosed above.

As used herein, the term "*high-chloride*/*sulfate water*" refers to a water source having higher chloride and/or sulfate content than soft water or balanced water (*e.g.,* in the ranges below), and, a total dissolved solids content of about 1000 ppm to about 4000 ppm such as about 1000 ppm to about 3000 ppm, about 1000 ppm to about 2550 ppm, or about 2330 ppm; a calcium content of 100 ppm to about 700 ppm such as about 100 ppm to about 550 ppm; a magnesium content of about 50 ppm to about 500 ppm such as about 50 ppm to about 380 ppm; a carbonate alkalinity content of about 100 ppm to 300 ppm such as about 100 ppm to about 200 ppm; a chloride content of about 400 ppm to about 800 ppm such as about 400 ppm to about 600 ppm; a sulfate content of about 350 ppm to about 800 ppm such as about 400 ppm to about 600 ppm; and a pH between about 8.0 and about 8.8 such as about 8.5 to about 8.8. Further dissolved solids (*e.g.,* sodium, potassium, etc.) may be present in the high-chloride/sulfate water, which may increase the TDS content of the high-chloride/sulfate water disclosed above.

As used herein, the term "do*sage*" refers to the concentration of a polymer in a water source, such as in parts per million (ppm). Dosage includes the as-mixed amount of polymer in the water source.

As used herein, "*cycles of concentration ('COC)*" refers to the ratio of the concentration of dissolved solids (*e.g.,* TDS) in the blowdown water as compared to the concentration of dissolved solids in make-up water of a particular water containing system. Notwithstanding the differences in TDS content between blow-down water and make-up water, typically, COC is measured using the same water source for all of the water associated therewith (*e.g.,* fresh water or saltwater from the same source makes up the water in the system (blow-down) and the make-up water). The specific TDS content associated with a COC varies with the TDS content of the particular water source in use.

As used herein, "*water containing system*" refers to a system having one or more hard parts (*e.g.,* metal parts) that conduct, hold, contain, filter, or otherwise come in contact with a water source. Exemplary water containing systems include cooling systems (*e.g.,* cooling towers, radiators, heat pipes, etc.), pipes, drilling equipment (*e.g.,* drill strings, drilling mud, etc.), fracking equipment, paper or pulp processing systems, wastewater treatment systems, water purification systems, ware washing, evaporators, condensers, filtration equipment, membranes, mining equipment, water softening systems, kamyr digesters, pumps, storage vessels, or any other systems using water sources that contact one or more surfaces therein. Such surfaces may include the interior of pipes, storage vessels, radiators, heat pipes, filters, digesters, condensers, etc.; the exterior of cooling towers; or any other surface that contacts a water source. The surfaces of the water containing systems disclosed herein may include metals, such as iron, steel (*e.g.,* stainless steel, carbon steel, or galvanized steel), copper, lead, zinc (*e.g.,* anodized pipes), aluminum, or any other metal suitable for use in water containing systems; plastics, such as polyethylene (*e.g.,* PEX), polypropylene, polytetrafluoroethylene, polyvinyl chlorides, acrylonitrile butadiene styrene, etc.; glass *(e.g.,* glass storage vessels), rubber or latex (rubber hoses or tubes); fiberglass; concrete or stone; or any other material suitable to hold, transport, or filter water.

As used herein, the term "*carbon steel*" means steel in which the main alloying component with iron is carbon, wherein the carbon steel comprises between about 0.1% to about 2.1% by weight of carbon.

As used herein, the term "*molecular weight*" refers to the weight average molecular weight (M_{W}) unless otherwise recited or by context.

The terms *"comprise(s)," "include(s)," "having," "has," "can," "contain(s),"* and variants thereof, as used herein, are intended to be open-ended transitional phrases, terms, or words that do not necessarily but may preclude the possibility of additional acts or structures. The singular forms *"a," "and,"* and *"the"* include plural references unless the context clearly dictates otherwise. The present disclosure also contemplates other embodiments *"comprising," "consisting of,"* and *"consisting essentially of,"* the embodiments or elements presented herein, whether explicitly set forth or not. Generally and as determined by context, the term *"includes,"* as used in the specification, may be interpreted to mean any of *"comprising," "consisting of,"* or *"consisting essentially of."*

As used herein, the term *"optional"* or *"optionally"* means that the subsequently described event or circumstance may but need not occur, and that the description includes instances where the event or circumstance occurs and instances in which it does not.

As used herein, the term *"αbout"* modifying, for example, the quantity of an ingredient in a composition, concentration, volume, process temperature, process time, yield, flow rate, pressure, and like values, and ranges thereof, employed in describing the embodiments of the disclosure, refers to variation in the numerical quantity that can occur, for example, through typical measuring and handling procedures used for making compounds, compositions, concentrates or use formulations; through inadvertent error in these procedures; through differences in the manufacture, source, or purity of starting materials or ingredients used to carry out the methods, and like proximate considerations. The term *"about"* also encompasses amounts that differ due to aging of a formulation with a particular initial concentration or mixture, and amounts that differ due to mixing or processing a formulation with a particular initial concentration or mixture.

As used herein, the word *"substantially"* or *"consisting essentially of"* modifying, for example, the type or quantity of an ingredient in a composition, a property, a measurable quantity, a method, a position, a value, or a range, employed in describing the embodiments of the disclosure, refers to a variation that does not affect the overall recited composition, property, quantity, method, position, value, or range thereof in a manner that negates an intended composition, property, quantity, method, position, value, or range. Examples of intended properties include, solely by way of non-limiting examples thereof, flexibility, partition coefficient, rate, solubility, temperature, and the like; intended values include thickness, yield, weight, concentration, and the like. The effect on methods that are modified by *"substantially"* or *"consisting essentially of"* include the effects caused by variations in type or amount of materials used in a process, variability in machine settings, the effects of ambient conditions on a process, and the like wherein the manner or degree of the effect does not negate one or more intended properties or results; and like proximate considerations.

### Discussion

### Polymer Compositions

The polymer compositions (*e*.*g*., composite polymers) are capable of inhibiting corrosion formation in a water containing system without the use of phosphorous containing moieties or residues. Polymer compositions as those defined in claim 1 inhibit corrosion in water containing systems. Such corrosion may be due to corrodents (*e.g.,* corrosion inducing components such as acids or dissolved alkaline salts (*e.g.,* alkaline metals or alkaline earth metals) in solution or solid form (*e.g.,* suspended or dissolved solids) and counter ions thereof (*e.g.,* carbonate, sulfate, phosphate, chloride, etc.), dissolved gasses such as carbon dioxide, hydrogen sulfide, etc.) in a water source and/or a high temperatures of the water source. The polymer compositions and polymer mixtures disclosed herein inhibit corrosion, in water containing systems without the use of phosphorous or phosphorous containing compounds (*e.g.,* phosphates) that tend to foul ground water or watersheds. The polymers herein may be used in any water containing system including a water source having high TDS, such as connate, produced water, or saltwater (*e*.*g*., brackish water or seawater) systems; or a system having low TDS water source (*e.g.,* less than 4000 ppm TDS) such as freshwater, soft water, balanced water, high-chloride/sulfate water, municipal water, or cooling water. Suitable applications for the polymers herein may include scale or corrosion inhibition in freshwater systems; municipal waste treatment systems; municipal potable water treatment systems or delivery lines; cooling systems employing low TDS water (*e.g.,* less than about 4000 ppm TDS, such as freshwater, soft water, balanced water, high-chloride/sulfate water, municipal water, or cooling water); desalination systems; cooling systems employing salt, brine, or seawater; drilling systems utilizing aqueous drilling fluids or produced water; pulp processing; or any other water containing system in which corrosion and/or scale inhibition is desired.

The corrosion inhibitors herein are beneficial in that they permit the use of carbon steel components rather than the much more expensive high nickel, cobalt, and chromium alloys or other materials either more expensive than carbon steel and/or which inherently entail other disadvantages in suitability for the purpose of liquid containment. Corrosion inhibitors may be added to the liquids and dissolved gasses which come into contact with metal surfaces and such inhibitors prevent, retard, delay, reverse, and/or otherwise inhibit the corrosion of metal surfaces such as carbon-steel metal surfaces in water containing systems. While highly desirable for this purpose, their use entails additional cost for the operator. Further, such corrosion inhibitors must ultimately be disposed in the environment. It is therefore advantageous to provide the corrosion inhibiting polymers disclosed herein which are effective in low amounts and provide compositions containing the corrosion inhibiting polymers at the lowest concentrations, wherein the corrosion inhibiting polymers provide effective corrosion inhibition at the relatively low amounts disclosed herein.

The produced water is reused in an injectate wherein the injectate comprises, consists of, or consists essentially of the produced water, the injectate is reinjected into a pipe leading to a subterranean reservoir, and a crude oil/recycled produced water is subsequently recovered from a subterranean reservoir. If such injectate contains corrosion inhibitor, some of the corrosion inhibitor remains in the ground, some is returned as part of the recycled produced water, or both. If some of the corrosion inhibitor remains in the ground, this is a loss to the operator. Further, the corrosion inhibitor remaining in the ground, depending on its chemical nature and concentration, can be environmentally deleterious. It is therefore also advantageous to use the corrosion inhibitors herein which are effective in lowest amount (e.g., less than 100 ppm, or less than 20 ppm, or less than 5 ppm) and to provide compositions containing corrosion inhibitors effective at the lowest concentrations, wherein the corrosion inhibitors provide effective corrosion inhibition using the least amounts of corrosion inhibitor.

The polymers disclosed herein may inhibit corrosion when used at relatively low concentrations in water sources, such as below 200 ppm. For example, the terpolymers, tetrapolymers, and pentapolymers disclosed below may facilitate selective inhibition of corrosion in systems utilizing corrodent containing water source(s), without the presence of phosphorous containing moieties. Such corrosion can be due in part to one or more of pH, temperature, or dissolved solids content and/or species in the water source or system.

The polymer compositions herein include 3 monomers, 4 monomers, or 5 monomers, as described below. The polymer compositions herein is free of (*e*.*g*., having no) phosphorous or phosphorous containing materials, such as phosphates, phosphonates, or the like.

### Terpolymers

The corrosion inhibiting polymer composition is a terpolymer as defined in claim 1.

The first monomer constitutes 90 mol% to 97 mol%, about 93 mol% to 97 mol%, about 92 mol% to about 94 mol%, about 93 mol% to about 96 mol%, 90 mol%, about 92.9 mol%, about 93.3 mol%, about 95 mol%, about 96 mol%, or about 96.4 mol% of the terpolymer.

The second monomer constitues 0.01 mol% to 5 mol%, about 1.5 mol% to about 4 mol%, about 2 mol% to 5 mol%, about 1.6 mol%, about 2 mol%, about 3 mol%, about 3.6 mol%, about 3.7 mol%, or about 4 mol% of the terpolymer.

The third monomer constitutes 0.01 mol% to 5 mol%, about 1 mol% to 5 mol%, about 1 mol% to about 3 mol%, about 1.5 mol% to about 3.5 mol%, about 3 mol% to 5 mol%, about 1.8 mol%, about 2 mol%, or about 3 mol% of the terpolymer.

The first monomer of the terpolymer comprises, consists essentially of, or consists of one or more of AA, MA, MAA, or residues thereof. The second monomer of the terpolymer comprises, consists essentially of, or consists of one or more of MA, MAA, ATBS, methallyl sulfonate, sulfostyrene or residues thereof, where the second monomer is chemically different from the first monomer. The third monomer of the terpolymer comprises, consists essentially of, or consists of one or more of ATBS, tert-butylacrylamide, dimethylacrylamide, itaconic acid, crotonic acid, or residues thereof, where the third monomer is chemically different from the second monomer and the first monomer. In an embodiment, the terpolymer comprises, consists essentially of, or consists of one or more of AA residue, MA or MAA residue, and ATBS residue. The AA residue may constitute 90 mol% to 97 mol% of the terpolymer, the MA residue may constitute about 1 mol% to 5 mol% of the terpolymer, and the ATBS residue may constitute at least a portion of the balance of the terpolymer (*e*.*g*., about 1 mol% to 5 mol%). The AA residue may constitute 90 mol% to 97 mol% of the terpolymer, the MAA residue may constitute about 1 mol% to 5 mol% of the terpolymer, and the ATBS residue may constitute at least a portion of the balance of the terpolymer (*e.g.,* about 1 mol% to 5 mol%). In an embodiment, the terpolymer comprises, consists essentially of, or consists of one or more of AA residue, ATBS residue, and itaconic acid or crotonic acid residue. The AA residue may constitute 90 mol% to 97 mol% of the terpolymer, the ATBS residue may constitute about 1 mol% to 5 mol% of the terpolymer, and the itaconic acid or crotonic residue may constitute at least a portion of the balance of the terpolymer (*e.g.,* about 1 mol% to 5 mol%). In an embodiment, the terpolymer comprises, consists essentially of, or consists of one or more of AA residue, ATBS residue, and tert-butylacrylamide residue. The AA residue may constitute 90 mol% to 97 mol% of the terpolymer, the ATBS residue may constitute about 1 mol% to 5 mol% of the terpolymer, and the tert-butylacrylamide residue may constitute at least a portion of the balance of the terpolymer (*e.g.,* about 1 mol% to 5 mol%). In an embodiment, the terpolymer comprises, consists essentially of, or consists of AA residue, ATBS residue, and dimethyl acrylamide residue. The AA residue may constitute 90 mol% to 97 mol% of the terpolymer, the ATBS residue may constitute about 1 mol% to 5 mol% of the terpolymer, and the dimethylacrylamide residue may constitute at least a portion of the balance of the terpolymer (*e.g.,* about 1 mol% to 5 mol%).

As discussed in detail below, the terpolymer can exhibit any of a wide range of molecular weights. As discussed in more detail below, the terpolymer can be mixed *(e.g.,* at least partially dissolved, dispersed, or suspended) in water and/or a water source in any of a wide range of dosages. Without wishing to be limited by theory, we believe that during use, one or more moieties (*e.g.,* hydrophobic moieties) present in the polymer may bond to a metal surface forming a passivating film on the metal surface and/or could act as a cathodic or anodic inhibitor, or otherwise render corrodents substantially ineffective or very slow to corrode equipment in water containing systems, such as cooling, desalination, or drilling equipment. As discussed in detail below, the terpolymers herein may also include a tagging agent (*e.g.,* fluorescent tag or marker).

### Tetrapolymers

In some embodiments, the corrosion inhibiting polymer composition is a tetrapolymer (*e*.*g*., quaterpolymer or quadpolymer). The tetrapolymer may comprise, consist essentially of, or consist of a first monomer, a second monomer, a third monomer as described above with respect to the terpolymer; and a fourth monomer including itaconic acid, a salt thereof, or a conjugate base thereof; crotonic acid, a salt thereof, or a conjugate base thereof; tert-butylacrylamide; or dimethylacrylamide. Each of the first, second, third, and fourth monomers are chemically different from each other.

The first monomer is as described above with respect to the

The first monomer constitutes 90 mol% to 97 mol%, 90 mol% to about 95 mol%, about 91 mol% to about 95 mol%, about 93 mol%, or about 95 mol% of the tetrapolymer.

The second monomer is as described above with respect to the terpolymer, where the second monomer is chemically different from the first monomer.

For example, the second monomer may comprise, consist essentially of, or consist of one or more of MA or MAA residue while the first monomer includes AA residue, or vice versa.

The second monomer constitutes 0.01 mol% to 5 mol%, about 1 mol% to about 4 mol%, about 1 mol% to 5 mol%, about 2 mol% to about 4 mol%, about 3 mol% to 5 mol%, about 1 mol%, about 2 mol%, about 3 mol%, about 3.5 mol%, or about 4 mol% of the tetrapolymer.

The third monomer of the tetrapolymer is as described above with respect to the terpolymer, where the third monomer is chemically different from the first monomer and the second monomer. For example, the third monomer may include itaconic acid or crotonic acid and the first and second monomers may include AA and MA, respectively.

The third monomer constitutes 0.01 mol% to 5 mol%, about 1 mol% to about 3 mol%, about 3 mol% to 5 mol%, about 1 mol% to 5 mol%, about 1 mol%, about 1.8 mol%, about 2 mol%, or about 3 mol% of the tetrapolymer. For example, the fourth monomer may include itaconic acid or crotonic acid and one or more of the first, second, and third monomers may include or consist of AA, MA, and/or MAA, respectively.

The fourth monomer constitutes 0.01 mol% to 5 mol%, about 3 mol% to 5 mol%, about 1 mol% to about 4 mol%, about 1 mol% to about 3 mol%, about 1.5 mol% to about 3 mol%, about 1 mol% to 5 mol%, about 3 mol% to 5 mol%, or about 3 mol% of the tetrapolymer.

The first monomer of the tetrapolymer comprises, consists essentially of, or consists of one of AA, MA, MAA, or residues thereof. The second monomer of the tetrapolymer comprises, consists essentially of, or consists of one of MA, MAA, ATBS, methallyl sulfonate, sulfostyrene or residues thereof, where the second monomer is chemically different from the first monomer. The third monomer of the tetrapolymer may comprises, consists essentially of, or consists of one of ATBS, tert-butylacrylamide, dimethylacrylamide, itaconic acid, crotonic acid or residues thereof, where the third monomer is chemically different from the second monomer and the first monomer. The fourth monomer of the tetrapolymer is one of tert-butylacrylamide, dimethylacrylamide, itaconic acid, crotonic acid, or residues thereof, where the fourth monomer is chemically different from the first, second, and third monomers.

In an embodiment, the tetrapolymer comprises, consists essentially of, or consists of AA residue, MA residue, ATBS residue, and tert-butylacrylamide residue. The AA residue may constitute 90 mol% to about 95 mol% of the tetrapolymer, the MA residue may constitute about 1 mol% to 5 mol% of the tetrapolymer, the ATBS residue may constitute about 1 mol% to 5 mol% of the tetrapolymer, and the tert-butylacrylamide residue may constitute at least a portion of the balance of the tetrapolymer (*e.g*., about 1 mol% to 5 mol%). The AA residue may constitute about 93 mol% of the tetrapolymer, the MA residue may constitute about 2 mol% of the tetrapolymer, the ATBS residue may constitute about 3.5 mol% of the tetrapolymer, and the tert-butylacrylamide residue may constitute about 1.5 mol % of the tetrapolymer.

In an embodiment, the tetrapolymer comprises, consists essentially of, or consists of one or more of AA residue, ATBS residue, itaconic acid or crotonic acid residue, and tert-butylacrylamide residue. The AA residue may constitute 90 mol% to about 95 mol% of the tetrapolymer, the ATBS residue may constitute about 1 mol% to 5 mol% of the tetrapolymer, the itaconic acid or crotonic acid residue may constitute about 1 mol% to 5 mol% of the tetrapolymer, and the tert-butylacrylamide residue may constitute about 1 mol% to 5 mol% of the tetrapolymer. An any of the above embodiments, MA or MAA may be used in place of the AA, where the MA is chemically different from each of the monomers in the tetrapolymers. For example, the AA residue may constitute about 75 mol% to about 80 mol% of the tetrapolymer, the ATBS residue may constitute about 7 mol% to about 12 mol% of the tetrapolymer, the itaconic acid or crotonic acid residue may constitute about 7 mol% to about 12 mol% of the tetrapolymer, and the tert-butylacrylamide residue may constitute about 1 mol% to about 5 mol% of the tetrapolymer. For example, the AA residue may constitute about 78 mol% of the tetrapolymer, the ATBS residue may constitute about 10% of the tetrapolymer, the itaconic acid or crotonic acid residue may constitute about 10 mol% of the tetrapolymer, and the tert-butylacrylamide residue may constitute about 2 mol% of the tetrapolymer. For example, MA or MAA may be used in place of the AA, where the MA is chemically different from each of the monomers in the tetrapolymers.

As discussed in detail below, the tetrapolymer can exhibit any of a wide range of molecular weights. As discussed in more detail below, the tetrapolymer can be mixed in water and/or a water source in any of a wide range of dosages. Without wishing to be limited by theory, we believe that during use, one or more moieties present in the polymer (*e.g.,* one or more hydrophobic moieties) may bond to a metal surface forming a passivating film on the metal surface and/or could act as a cathodic or anodic inhibitor, or otherwise render corrodents substantially ineffective or very slow to corrode equipment in water containing systems, such as cooling, desalination, or drilling equipment. As explained in detail below, the tetrapolymers herein may also include a fluorescent tag or marker.

### Pentapolymers

In some embodiments, the corrosion inhibiting polymer composition is a pentapolymer. The pentapolymer may comprise, consist essentially of, or consist of a first monomer, a second monomer, a third monomer, a fourth monomer as described above with respect to the tetrapolymer; and a fifth monomer including methacrylic acid, a salt thereof, or a conjugate base thereof ("fourth" and "fifth" correspond to the monomeric designation of the monomer but not necessarily the total amount of carboxylic acids in the polymer). Each of the first, second, third, fourth, and fifth monomers are chemically different from each other.

The first monomer is as described above with respect to the terpolymer.

The first monomer may constitute mol% to about 96 mol%, about 92 mol% to about 96 mol%, about 91 mol%, about 93 mol%, about 95 mol%, or about 96 mol% of the pentapolymer.

The second monomer of the pentapolymer is as described above with respect to the terpolymer. For example, the second monomer may comprise, consist essentially of, or consist of MA or MAA residue while the first monomer includes AA residue, or vice versa.

The second monomer constitutes 0.01 mol% to 5 mol%, about 1 mol% to about 3 mol%, about 1 mol% to about 4 mol%, 1.5 mol% to about 4 mol%, about 1 mol% to 5 mol%, about 2 mol% to about 4 mol%, about 3 mol% to 5 mol%, about 1 mol%, about 1.5 mol%, about 2 mol%, about 3 mol%, about 3.5 mol%, or about 4 mol% of the pentapolymer.

The third monomer of the pentapolymer is as described above with respect to the terpolymer. For example, suitable alkylated molecules may include hydrophobic acrylamides or derivatives thereof, such as N-tert-butylacrylamide, dimethylacrylamide, residues of any of the foregoing.

The third monomer constitutes 0.01 mol% to 5 mol%, about 3 mol% to 5 mol%, about 1 mol% to 5 mol%, about 1 mol% to about 4 mol%, about 1 mol% to about 3 mol%, about 3 mol% to 5 mol%, about 1 mol%, about 1.2 mol%, about 1.5 mol%, about 1.8 mol%, about 2 mol%, about 3 mol%, or about 4 mol% of the pentapolymer.

The fourth monomer is as described above with respect to the tetrapolymer. For example, the fourth monomer may include itaconic acid or crotonic acid and one or more of the first, second, and third monomers may include or consist of AA, MA, and/or MAA, respectively.

The fourth monomer constitutes 0.01 mol% to 5 mol%, about 1 mol% to about 3 mol%, about 2 mol% to about 4 mol%, about 3 mol% to 5 mol%, about 1 mol% to 5 mol%, about 1 mol%, about 1.2 mol%, about 1.5 mol%, about 1.8 mol%, about 2 mol%, about 3 mol%, about 3.5 mol%, or about 4 mol% of the pentapolymer.

The fifth monomer comprises, consists essentially of, or consists of methacrylic acid, a salt thereof, or a conjugate base thereof. For example, the fifth monomer may include MAA and one or more of the first, second, third, and fourth monomers may include or consist of AA, MA, itaconic acid, or crotonic acid, respectively.

The fifth monomer constitutes 0.01 mol% to 5 mol%, about 1 mol% to about 3 mol%, about 3 mol% to 5 mol%, about 1 mol% to 5 mol%, about 1 mol%, about 1.5 mol%, about 2 mol%, about 2.5 mol%, about 3 mol%, about 3.5 mol%, or about 4 mol% of the pentapolymer.

For example, a sulfonated acid may be used in place of any of the above listed second, third, fourth, or fifth monomers in the pentapolymer. For example, ATBS may be used instead of the second carboxylic acid of the second monomer as described above. The sulfonated acid may be present in the same mol% as the respective monomer it substitutes for, as respectively disclosed above. For example, if ATBS were used in place of the second carboxylic acid, the ATBS may be present in the same mol% as the second carboxylic acid of the second monomer.

In an embodiment, the pentapolymer comprises, consists essentially of, or consists of AA residue, MA residue, tert-butylacrylamide residue, itaconic acid or crotonic acid residue, and methacrylic acid residue. The AA residue may constitute 90 mol% to about 96 mol% of the pentapolymer, the MA residue may constitute about 1 mol% to 5 mol% of the pentapolymer, the tert-butylacrylamide residue may constitute about 1 mol% to 5 mol% of the pentapolymer, the itaconic acid or crotonic acid residue may constitute about 1 mol% to 5 mol% of the pentapolymer, and the MAA residue may constitute at least a portion of the balance of the pentapolymer (e.g., about 1 mol% to 5 mol%). In an embodiment, the AA residue constitutes 90 mol% of the pentapolymer, the MA residue constitutes about 3 mol% of the pentapolymer, the tert-butylacrylamide residue constitutes about 1.5 mol% of the pentapolymer, the itaconic acid or crotonic acid residue constitutes about 2 mol% of the pentapolymer, and the MAA residue constitutes about 3.5 mol% of the pentapolymer.

As discussed in detail below, the pentapolymer can exhibit any of a wide range of molecular weights. As discussed in more detail below, the pentapolymer can be mixed water and/or in a water source in any of a wide range of dosages. Without wishing to be limited by theory, we believe that during use, one or more moieties (e.g., hydrophobic moieties) present in the polymer may bond to a metal surface forming a passivating film on the metal surface and/or could act as a cathodic or anodic inhibitor, or otherwise render corrodents substantially ineffective or very slow to corrode equipment in water containing systems, such as cooling, desalination, or drilling equipment. In some embodiments and as explained in detail below, a fluorescent tag or marker may be added to the pentapolymer.

### Polymer Composition Characteristics

The embodiments of polymers (e.g., corrosion inhibiting polymer compositions) disclosed herein exclude phosphorous or phosphorous containing moieties. The above described polymers may substantially inhibit or prevent corrosion in water containing systems having low TDS water sources (e.g., less than about 4000 ppm, such as about 500 ppm to about 2550 ppm) and/or having high TDS water sources (e.g., about 4,000 ppm- to about 350,000). The polymers described herein inhibit corrosion without the use of phosphorous or phosphorous containing molecules or moieties therein. The polymers herein may be formed in a liquid, semi-liquid (e.g., gel), or solid form, depending on the specific polymer, monomeric make-up, and/or molecular weight thereof. The polymer solutions disclosed herein may exhibit a viscosity of about 0.1-0.2 Ns/m² (100-200 cps) as measured by a Brookfield viscometer at 25 degrees Celsius with a #3 spindle at 30 rpm.

The unit 1cps is equal to 0.001 Ns/m². The viscosity of any of the polymer compositions disclosed herein, prior to mixing in water and/or a water source, may be about 250 cps or less, such as about 50 cps to about 250 cps, about 100 cps to about 200 cps, about 120 cps to about 180 cps, about 140 cps, to about 160 cps, about 80 cps to about 120 cps, about 120 cps to about 150 cps, about 150 cps to about 180 cps, or about 180 cps to about 200 cps.

The molecular weight (M_{w}) of any of the polymers disclosed herein, prior to mixing in water and/or a water source, may be at least about 500 g/mol, such as about 500 g/mol to about 50,000 g/mol, about 1000 g/mol to about 20,000 g/mol, about 2,000 g/mol to about 12,000 g/mol, about 500 g/mol to about 3,000 g/mol, about 2,000 g/mol to about 8,000 g/mol, about 3,000 g/mol to about 6,000 g/mol, about 6,000 g/mol to about 9,000 g/mol, about 8,000 g/mol to about 10,000 g/mol, about 9,000 g/mol to about 12,000 g/mol, about 8,000 g/mol to about 15,000 g/mol, about 12,000 g/mol to about 15,000 g/mol, about 15,000 g/mol to about 20,000 g/mol, about 18,000 g/mol to about 22,000 g/mol, 15,000 g/mol to about 25,000 g/mol, about 20,000 g/mol to about 30,000 g/mol, about 30,000 g/mol to about 40,000 g/mol, about 40,000 g/mol to about 50,000 g/mol, or about 1,000 g/mol, about 2,000 g/mol, about 3,000 g/mol, about 4,000 g/mol, about 5,000 g/mol, about 7,000 g/mol, about 10,000 g/mol, about 11,000 g/mol, about 12,000 g/mol, about 14,000 g/mol, about 15,000 g/mol, about 18,000 g/mol, about 20,000 g/mol, about 22,000 g/mol, about 25,000 g/mol or less, or about 30,000 g/mol or less.

### Additive Components

For example, any of the embodiments of polymers (e.g., corrosion inhibiting polymer compositions) disclosed herein can include one or more additive components, such as one or more metallic components or one or more additional polymers. The one or more metallic components can include at least one metal, such as at least on transition metal, at least one metalloid, ions thereof, alloys of any of the foregoing, or combinations of any of the foregoing. The one or more metallic components can include a metal or an ion thereof such as aluminum, vanadium, chromium, manganese, molybdenum, tantalum, tungsten, cerium, silicon, any other metal or metalloid, ions thereof *(e.g.,* a molybdate, a silicate, etc.), or alloys of any of the foregoing. The corrosion inhibiting composition further comprises 0.05 ppm to 10 ppm of one or more of zinc or tin. Metal ions are generally added to the composition or provided in a composition in the form of a corresponding metal salt. The Zn as divalent ion is advantageously added to the composition or provided in a composition as zinc chloride, zinc acetate, zinc sulfate, or another zinc salt selected by the user. Where ppm of a metal ion is recited, the ppm refers to the metal ion itself. Thus, for example, 5 ppm of zinc is provided to a composition by adding an amount of the zinc salt corresponding to 5 ppm of the zinc cation.

For example, the corrosion inhibiting polymer mixture can be combined with one or more additional polymers or copolymers such as one or more oligomers of maleic acid, a homopolymer of acrylic acid, or copolymers of sulfonated monomers with acrylic acid. Such combinations can be about 1000:1 to about 1:1000 corrosion inhibiting polymer mixture to additional polymer or any other ranges therebetween, such as 1000 parts corrosion inhibiting polymer mixture to 1 part oligomer of maleic acid, or 1 part corrosion inhibiting polymer mixture to 1000 parts oligomer of maleic acid.

In some embodiments, each additive component or the sum of the one or more additive components can be present in the polymer mixture (or in some embodiments, the polymer composition) in a concentration of about 0.05 ppm to about 1000 ppm *(e.g.,* 0.05 ppm to about 50 ppm) of the corrosion inhibiting polymer mixture, such as about 0.05 ppm to about 10 ppm, about 0.05 ppm to about 3 ppm, about 0.05 ppm to about 5 ppm, about 1 ppm to about 5 ppm, about 2 ppm to about 10 ppm, about 5 ppm to about 20 ppm, about 15 ppm to about 30 ppm, about 20 ppm to about 40 ppm, about 30 ppm to about 50 ppm, about 50 ppm to about 100 ppm, about 1 ppm to about 30 ppm, about 10 ppm to about 100 ppm, about 50 ppm to about 500 ppm, about 100 ppm to about 1000 ppm, less than about 1000 ppm, less than about 500 ppm, less than about 100 ppm, less than about 30 ppm, less than about 10 ppm, or less than about 5 ppm. The additive component(s) can be admixed with the corrosion inhibiting polymer mixture prior to application in the water containing system, contemporaneously therewith, or after addition of the corrosion inhibiting polymer composition into the water containing system.

### Tagging Agents

In some embodiments, the polymers disclosed above include an additional tagging agent therein. For the purposes of categorizing polymers in this disclosure, such tagging agents are not counted as a monomeric unit of the polymer for determining the categorical name of said polymer. For example, a copolymer having AA, ATBS, and a tagging agent *(e.g.,* a monomer capable of fluorescing) therein, is still referred to as a copolymer rather than adding the additional monomeric tagging agent for the purposes of the category/title and describing the polymer as a terpolymer.

In some embodiments, the corrosion inhibiting polymer compositions disclosed above are tagged (*e*.*g*., polymerized) with a tagging agent for monitoring the polymer composition in feedstocks and/or blowdown water (*e*.*g*., used coolant or produced water having the polymer therein). The tagging agent can be polymerized into any of the polymers disclosed herein. Suitable tagging agents may include one or more monomers that are naphthalene-containing, anthracene-containing, quinoline-containing, isoquinoline-containing, indole-containing, pyrene-containing, benzimidazole-containing, coumarin-containing, fluorescein-containing, quinoxaline-containing, xanthylium-containing, boron-dipyrromethene-containing, bimane-containing, rhodamine-containing, or naphthalimide-containing. Specific monomers that can be used to fluorescently tag a polymer include but are not limited to 4-methoxy-N-(3-N',N'-dimethylaminopropyl)naphthalimide (quaternary salt), N-allyl-4-(2-N',N'-dimethylaminoethoxy)naphthalimide (methyl sulfate quaternary salt), 4-methoxy-N-(3-N',N'-dimethylaminopropyl) naphthalimide (allyl chloride quaternary salt), 5-allyloxy-4'-carboxy-1,8-naphthoylene-1',2'-benzimidazole, 6-Vinylbenzyloxy-4'-carboxy-1,8-naphthoylene-1',2 '-benzimidazole, 4-methoxy-N-(3-N' ,N' - dimethylaminopropyl)naphthalimide (2-hydroxy-3-allyloxypropyl quat), quaternary ammonium salt of dimethylaminopropylmethacrylamide and 2-(chloromethyl)quinoline, quaternary ammonium salt of dimethylaminopropylmethacrylamide and 9-(chloromethyl)anthracene, quaternary ammonium salt of dimethylaminopropylmethacrylamide and 2-(chloromethyl)benzimidazole, quaternary ammonium salt of dimethylaminopropylmethacrylamide and 4-(bromomethyl)pyrene, quaternary ammonium salt of dimethylaminopropylmethacrylamide and 1-(chloromethyl)naphthalene, any additional quaternary ammonium salt of dimethylaminopropylmethacrylamide and halo-alkyl derivative of the fluorescent chromophores previously listed, or any other fluorescent molecule capable of polymerizing with any of the above described corrosion inhibiting polymers. The tagging agent may constitute less than about 10 mol% of the any of the polymers disclosed herein, such as less than about 1 mol%, less than about 0.1 mol%, or less than about 0.01 mol% of the polymer. The tagging agent may constitute less than about 10 wt% of the any of the polymers disclosed herein, such as about 0.01 wt% to about 10 wt%, about 1 wt% to about 3 wt%, about 4 wt % to about 6 wt%, about 7 wt % to about 10 wt%, 2 wt% to about 5 wt%, less than about 5 wt%, less than about 3 wt%, less than about 1 wt%, about 0.01 wt% to about 1 wt%, about 0.01 wt% to about 0.1 wt%, or less than about 0.1 wt% of the polymer.

When the corrosion inhibiting polymers herein are tagged with a tagging agent, one can determine how much corrosion inhibiting polymer composition is being delivered in the water source and/or how much corrosion inhibiting polymer composition is being exhausted during use. A fluorometer, UV spectrometer, or other fluorescent material detecting apparatus may be used to determine the amount of fluorescent tag in a water source, and by extension, the amount of tagged polymer therein. Such equipment can be used to constantly monitor the concentration of a tagged polymer in a system or can be used to monitor said concentrations on demand (*e*.*g*., randomly or at selected intervals).

### Additional monomers

In some embodiments, the corrosion inhibiting polymer compositions disclosed above alternatively or additionally include one or more additional monomers. Additional monomers may include hydrogen bonding or cationic monomers. For example, a polymer composition may additionally include a monomer or residue formed from a hydrogen bonding molecule and/or a cationic molecule. Such compositions may include 2-10 different monomers. Suitable hydrogen bonding molecules include, by way of example, acrylamide, methacrylamide, N-vinyl formamide, methylene bis acrylamide, triallylamine and acid salts thereof, ethylene glycol dimethacrylate, hydroxymethylacrylate, hydroxyethylacrylate, hydroxypropylacrylate, hydroxypropylmethacrylate, diethylene glycol dimethacrylate, triethylene glycol dimethylacrylate, polyethylene glycol dimethacrylate, glycidyl methacrylate, vinyl alcohol, vinyl acetate, derivatives of any of the foregoing, salts of any of the foregoing, or analogues of any of the foregoing. Suitable cationic molecules include, by way of example, dimethylaminoethyl acrylate methyl chloride tetranary salts, dimethylaminoethyl acrylate benzyl chloride tetranary salts, dimethylaminoethyl acrylate methyl sulfate tetranary salt, dimethylaminoethyl methacrylate methyl sulfate tetranary salt, dimethylaminoethyl acrylamide methyl sulfate tetranary salts, dimethylaminopropyl acrylamide methyl sulfate tetranary salts, dimethylaminopropyl methacrylamide methyl sulfate tetranary salts, diallyldimethyl ammonium chloride, dimethylaminoethyl methacrylate methyl chloride tetranary salt, dimethylaminoethyl methacrylate benzyl chloride tetranary salt, methacrylamidopropyl trimethyl ammonium chloride, acrylamidopropyl trimethyl ammonium chloride, dissociated species of any of the foregoing, or analogues of any of the foregoing. In some embodiments, any of the above listed species may be used to supply a polymerized monomer having a desired moiety (*e.g*., carboxylate groups) to the polymer composition. One or more of the above additional monomer species may be used in place of or in addition to any of the first, second, third, fourth, or fifth monomers disclosed herein. The additional monomers may be about 5 mol% or less of the polymer composition, such as 4 mol% or less, 3 mol%, or less, 2 mol% or less, or about 0.01 mol% to about 5 mol%, or more than about 1 mol% of the polymer composition including the same.

### Polymer Mixtures

The corrosion inhibiting polymers disclosed herein may be mixed in water (*e*.*g*., tap or distilled water) and/or a water source to form a corrosion inhibiting polymer mixture to inhibit corrosion (*e*.*g*., pitting, oxidation, or erosion of a material due to chemical interactions), such as on one or more surfaces that contact the water source. The water source may include a low TDS water source (*e*.*g*., having a TDS content below 4000 ppm) such as soft water, balanced water, high-chloride/sulfate water, cooling water (*e*.*g*., a low TDS water source used to cool a system and that has not been concentrated to have a TDS above 4000 ppm), municipal water (*e*.*g*., potable water). In some embodiments, the water source may additionally or alternatively include sea water, connate, produced water, brackish water, brine, a synthetic version of any of the foregoing, combinations of any of the foregoing, or any other water source having a high TDS content (*e*.*g*., about 4000 ppm to about 350,000 ppm). In some embodiments, a water source can include TDS levels higher than 4,000 ppm, such as about 5,000 ppm or more (*e*.*g*., brackish water), about 10,000 ppm or more, about 15,000 ppm or more *(e.g.,* saline water), about 30,000 ppm or more *(e.g.,* salt water), or about 40,000 ppm or more *(e.g.,* brine). In some embodiments, a water source *(e.g.,* soft water) includes concentrations of certain dissolved solids, such as dissolved solids likely to form scales, cause corrosion, or solids having corrodent components likely to induce corrosion as disclosed herein. For example, the water source may include at least about 400 ppm of calcium, at least about 390 ppm of potassium, at least about 1200 ppm of magnesium, and/or identical ppm dosages of counter-ions of any of the foregoing (*e*.*g*., chloride, fluoride, sulfate, or ions) such as in seawater. The polymers disclosed herein may be particularly useful in inhibiting corrosion in soft water, balanced water, high-chloride/sulfate water, or any other water source having corrodents therein. Some water sources may have varying concentrations of different dissolved solids than soft water, balanced water, or high-chloride/sulfate water.

The water source may include one or more corrodents therein, wherein the one or more corrodents comprises, consists essentially of, or consists of carbon dioxide, hydrogen sulfide, organosulfur compounds, metal cations, metal complexes such as aqueous metal cations, metal chelates and/or organometallic complexes, aluminum ions, ammonium ions, barium ions, chromium ions, cobalt ions, cuprous ions, cupric ions, calcium ions, ferrous ions, ferric ions, hydrogen ions, lead ions, magnesium ions, manganese ions, molybdenum ions, nickel ions, potassium ions, sodium ions, strontium ions, titanium ions, uranium ions, vanadium ions, zinc ions, bromide ions, carbonate ions, chlorate ions, chloride ions, chlorite ions, dithionate ions, fluoride ions, hypochlorite ions, iodide ions, nitrate ions, nitrite ions, oxide ions, perchlorate ions, peroxide ions, phosphate ions, phosphite ions, sulfate ions, sulfide ions, sulfite ions, hydrogen carbonate ions, hydrogen phosphate ions, hydrogen phosphite ions, hydrogen sulfate ions, hydrogen sulfite ions, carbonic acid, hydrochloric acid, nitric acid, sulfuric acid, nitrous acid, sulfurous acid, peroxy acids, phosphoric acid, ammonia, bromine, carbon dioxide, chlorine, chlorine dioxide, fluorine, hydrogen chloride, hydrogen sulfide, iodine, nitrogen dioxide, nitrogen monoxide, oxygen, ozone, sulfur dioxide, hydrogen peroxide, polysaccharide, or combinations thereof. In embodiments, the one or more corrodents comprises insoluble particulates such as metal oxides, sands, clays, silicon dioxide, titanium dioxide, muds, and other insoluble inorganic and/or organic particulates, which in embodiments act as abrasives when entrained in a water flow contacting a metal. In embodiments, the one or more corrodents comprises, consists of, or consists essentially of an oxidizing agent. Each corrodent or the total amount of one or more corrodents in the water source may be present in a concentration of at least about 10 ppm, such as at least about 50 ppm, at least about 100 ppm, at least about 300 ppm, at least about 500 ppm, at least about 1000 ppm, at least about 2000 ppm, at least about 5000 ppm, at least about 10,000 ppm, at least about 20,000 ppm, or less than about 100,000 ppm. For example, the water source can include oxygen, sulfur, corrodent(s) containing one or more forms of the same (e.g., sulfides), or any other corrodent(s) in a concentration of about 100 ppm to about 350,000 ppm, about 200 ppm to about 20,000 ppm, about 500 ppm to about 100,000 ppm, about 10 ppm to about 10,000 ppm, about 100 ppm to about 1000 ppm, about 50 ppm to about 500 ppm, or less than about 5000 ppm. For example, the corrodent comprises, consists of, or consists essentially of a chelating agent. For example, the corrodent comprises an alcohol. For example, the corrodent comprises an organochlorine compound. For example, the produced water comprises, between 1000 ppm and 200000 ppm of chloride ions. For example, the one or more corrodents comprises, consists of, or consists essentially of an acid. For example, the one or more corrodents comprises, consists of, or consists essentially of an alkali.

In any of the embodiments, the pH of the water source is between 7 and 14. For example, the pH of the water source is between about 7 and about 10. In embodiments, the pH of the water source is between about 10 and 14. In embodiments, the pH of the water source is between about 9 and about 11. In embodiments, the pH of the water source is between about 7 and about 9, such as between about 7 and about 8. In embodiments, the pH of the water source is between about 8 and about 9. In embodiments, the pH of the water source is between about 9 and about 10. In embodiments, the pH of the water source is between about 10 and about 11. In embodiments, the pH of the water source is between about 11 and about 12. In embodiments, the pH of the water source is between about 12 and about 13. In embodiments, the pH of the water source is between about 13 and 14.

Corrosion may be due to corrosive chemical(s) and/or conditions, such as the presence of basic or acidic chemicals and/or conditions, the presence or absence of oxidizers, the presents or absence of reducers, including the presence of components such as metals, alkaline metals, or alkaline earth metals in solution or solid form (*e*.*g*., suspended and/or dissolved solids) and counter ions thereof (*e*.*g*., oxides, sulfides, carbonates, bicarbonates, sulfates, bisulfates, phosphates, bisphosphates, phosphates, hydroxides, etc.) in the water source. For example, seawater may have a relatively high concentration of calcium and carbonate ions as compared to freshwater, whereby use of untreated seawater in a water containing system may result in relatively greater amounts of corrosion on the equipment that contact the seawater, such as due to under deposit corrosion or microbial corrosion due in part to scaling and/or basic or acidic water conditions. In some examples, soft, balanced, or high-chloride/sulfate water sources may have a saturation index less than 0, and therefore may be more likely to induce corrosion than high TDS water sources (*e*.*g*., sea water, produced water, or brackish water). The polymers and polymer mixtures disclosed herein may inhibit corrosion, such as corrosion caused by contact of a surface with a water source containing corrodents or corrosive conditions which may cause corrosion. The polymers and polymer mixtures herein may also inhibit formation of scale such as scale formed from calcium carbonate; magnesium carbonate; calcium sulfate; barium sulfate; barium carbonate; calcium fluoride; silicates of calcium, magnesium, aluminum, or iron; etc.; or any other scales known to form in aqueous systems. The polymer compositions disclosed above inhibit corrosion without the use of phosphorous or phosphorous containing compounds (*e*.*g*., phosphates).

In use, the polymer compositions herein may be mixed in water and/or a water source to result in a polymer mixture. For example, any of the polymer compositions disclosed herein may be dispersed in water (*e*.*g*., tap or deionized water) and then may be mixed in a water source. The polymer compositions herein may be mixed directly into a water source. The polymers herein may be delivered to a water source in powder form or mixed in water, and then may be mixed into the water source. Any of the polymer compositions disclosed herein may be emulsified in a water source. The polymer compositions herein may be mixed into water and/or a water source by one or more of batch-wise, continuous (*e*.*g*., drip feed), or incremental addition(s) of the polymer composition, in an as-formed polymer composition or mixed into water, to the water source. For example, a water source having one or more of the corrosion inhibiting polymer compositions is recirculated through a portion of a water containing system such as a cooling tower, radiator, or drill string and may be augmented with an additional or supplemental amount of corrosion inhibiting polymer composition. Such augmentation may be monitored and controlled by tracking one or more tagging agents in the polymers as described above.

One or more of the corrosion inhibiting polymer compositions may be mixed in the water source in any one of various dosages. For example, a polymer composition may be mixed in water and/or a water source to arrive at a dosage of about 0.01 ppm or more, such as about 0.01 ppm to about 1000 ppm, about 0.05 ppm to about 200 ppm, about 0.1 ppm to about 100 ppm, about 0.2 ppm to about 50 ppm, about 0.01 ppm to about 1 ppm, about 1 ppm to about 5 ppm, about 3 ppm to about 8 ppm, about 5 ppm to about 10 ppm, about 5 ppm to about 15 ppm, about 7 ppm to about 12 ppm, about 12 ppm to about 18 ppm, about 10 ppm to about 20 ppm, about 20 ppm to about 30 ppm, about 30 ppm to about 40 ppm, about 40 ppm to about 50 ppm, about 50 ppm to about 80 ppm, about 80 ppm to about 100 ppm, about 100 ppm to about 200 ppm, about 200 ppm to about 500 ppm, about 0.01 ppm to about 10 ppm, about 0.1 ppm to about 20 ppm, or about 0.5 ppm to about 10 ppm. The dosage may be more than about 0.01 ppm and less than about 200 ppm, such as less than about 100 ppm, less than about 50 ppm, less than about 20 ppm, less than about 10 ppm, less than about 5 ppm, or less than about 2 ppm. Any of the above listed dosages may be an effective amount to substantially inhibit or prevent corrosion in a water containing system utilizing a water source having high TDS therein. The polymer compositions may be mixed into water and/or the water source in batch-wise or continuous feeds in amount less than the dosage, such as in a fraction of the dosage per unit time. Examples of such a mixing scheme may include adding one tenth of the total dosage over ten evenly spaced intervals (*e*.*g*., 1 to 10 minute intervals); adding half of the dosage at a beginning point and the other half after an interval has passed; a continuous feed configured to arrive at the desired dosage after a selected amount of time, such as about 1 hour to about 1 day; or the like. The polymer compositions or polymer compositions mixed in water may be mixed in the make-up water source fed into the system or may be mixed into the water source in the system (in-situ).

### Systems

The corrosion inhibiting polymer compositions and polymer mixtures disclosed herein may be used in a water containing system. For example, the corrosion inhibiting polymer compositions and polymer mixtures disclosed herein may be used in any water containing system, such as desalination systems, cooling systems (*e*.*g*., cooling towers, radiators, heat pipes, etc.), pipes, drilling equipment (*e*.*g*., drill strings, drilling mud, etc.), tracking and fracking equipment, paper or pulp processing systems, wastewater treatment systems, water purification systems, ware washing, evaporators, condensers, filtration, mining, water softening, kamyr digesters, pumps, storage vessels, or any other systems using water sources or that contact one or more surfaces therein. During use, as the scale and/or forming and/or corrosion promoting content of the water sources concentrate (*e*.*g*., through evaporation) and/or thermal shock occurs, corrosive conditions intensify, corrosion initiates, and scale deposits on the surfaces of water containing systems from the water sources in contact therewith. Such surfaces may include the interior of pipes, storage vessels, radiators, heat pipes, filters, digesters, condensers, the exterior of cooling towers, or any other surface that contacts a water source. The surfaces of the water containing systems may include metals, plastics, glass, rubber or latex, fiberglass, concrete or stone, or any other material suitable to hold, transport, or filter water.

For example, the water source is soft water, balanced water, high-chloride/sulfate water, seawater, connate, produced water, or brine and the water containing system utilizing one or more of the corrosion inhibiting polymer compositions is a cooling system including one or more of a water jacket, radiators, pipes, heat pipes, pumps, a cooling tower, etc. As the water source circulates through the water containing system and is evaporated on one or more portions thereof, the TDS content gradually concentrates with each cycle through the system. The corrosive materials therein may reach a concentration where they begin to corrode the surfaces in contact therewith, if left untreated. In some embodiments, the water source may initially include (*e*.*g*., without concentrating the water source) sufficient concentrations of one or more corrodents to initiate corrosion upon contact of a surface of a water containing system. One or more of the corrosion inhibiting polymer compositions or polymer mixtures may be added therein and function to inhibit or prevent corrosion *(e.g.,* pitting or oxidation) caused by the make-up *(e.g.,* pH and/or dissolved solids) of the water source. Such a polymer mixture may prevent or inhibit corrosion in pipes, pumps, compressors, heat exchange surfaces (*e*.*g*., radiators or water jackets), or any other parts of the water containing system.

For example, the water source includes fresh water (*e*.*g*., tap water) and the water containing system utilizing one or more of the corrosion inhibiting polymer compositions is a cooling system including one or more of a water jacket, radiators, pipes, heat pipes, at least one pump, a cooling tower, etc. As the fresh water circulates through the water containing system and is evaporated in one or more portions thereof, the relatively low TDS content gradually concentrates with each cycle through the system. The corrosion forming materials therein may reach a TDS concentration of a water source as defined above and/or reach a concentration where they begin to corrode the surfaces in contact therewith, if left untreated. One or more of the corrosion inhibiting polymer compositions or polymer mixtures may be added therein and function to inhibit or prevent corrosion from corrodents and/or scale (*e*.*g*., calcium carbonate or calcium sulfate scale) formation caused by the dissolved solids in the fresh water. Such a polymer mixture may prevent or inhibit calcium carbonate or other scaling or deposition in pipes, pumps, compressors, heat exchange surfaces (*e*.*g*., radiators or water jackets), or any other parts of the water containing system.

The water source and corrosion inhibiting polymer composition may be maintained in a closed system or an open system, augmented with additional water from outside the system *(e.g.,* make-up water), and/or may be circulated out of the system (*e.g*., blow-down water) and replaced with additional water and/or corrosion inhibiting polymer composition from outside the system. Such maintenance, augmentation, and removal of the water source and/or polymer mixture allows a user to selectively control the concentration of polymer composition in the water source and/or amount or rate of corrosion in the water containing system.

### Methods

In an embodiment, a method of inhibiting corrosion includes providing or forming a corrosion inhibiting polymer composition (*e*.*g*., a composite polymer), such as any of those disclosed herein. The method may include providing a water source, such as any water source disclosed herein. The method may include mixing one or more of the corrosion inhibiting polymers in the water source. Mixing may include forming one or more of a dispersion, an emulsion, or a solution of the corrosion inhibiting polymer composition and water. Mixing may include forming one or more of a dispersion, an emulsion, or a solution of the corrosion inhibiting polymer composition and the water source, or may include mixing the corrosion inhibiting polymer composition in water and then mixing the same into the water source. Mixing may include one or more of batch wise *(e.g.,* an individual aliquot), continuous *(e.g.,* drip-feed, spray feed), or incremental (*e.g*., supplemental, on-demand, or monitored) additions. Mixing may include disposing one or more corrosion inhibiting polymers in the water source in any of the dosages disclosed herein. Mixing may include disposing one or more corrosion inhibiting polymers in water and then into the water source in any of the dosages disclosed herein.

The method includes applying the corrosion inhibiting polymer mixture to a water containing system. Applying the corrosion inhibiting polymer mixture may include circulating the polymer mixture through the water containing system, such as any water containing system or component thereof disclosed herein. For example, the polymer mixture may be circulated through a water jacket or piping. In an embodiment, the method includes recirculating the polymer mixture through the water containing system and selectively augmenting the corrosion inhibiting polymer content and/or water in the system to maintain, decrease, or increase the concentration of the corrosion inhibiting polymer in the polymer mixture. The composition of the corrosion inhibiting polymer mixture may be monitored, during use, by use of tagging agent *(e.g.,* fluorescent tag) and equipment *(e.g.,* fluorometer) to determine the concentration of polymer composition in the water source. Forming a corrosion inhibiting polymer may include any of the techniques disclosed below in the working examples.

The corrosion inhibiting polymers herein may be used to tolerate one or more selected species of corrosive ions in a water containing system without any corrosion, and optionally, at a particular dosage of the polymer composition or mixture thereof. For example, the method of inhibiting corrosion may include maintaining substantially no or at least 50% reduced corrosion (*e*.*g*., as compared to a system having no scale inhibitor therein). The dosage for tolerating corrosive species in the water containing system without corrosion (or 50% reduced corrosion) may include any of those dosages disclosed herein, such as about 0.1 ppm to about 50 ppm, about 10 ppm or less, or about 1 ppm or less, by way of example. The corrosion inhibiting polymer compositions disclosed herein unexpectedly prevented corrosion in relatively low dosages compared to commercially available corrosion inhibitors.

For example, even when corrosion is observed, the extent of the corrosion may be reduced at a specific corrodent concentration compared to other corrosion inhibiting compositions, and at lower dosages, when any of the polymer compositions described above are mixed therein. Such dosages may be similar or identical to any of those disclosed herein.

For example, any of the corrosion inhibiting polymers herein in any dosages disclosed herein can alternatively or additionally be used to prevent scale deposition of one or more surfaces in water containing systems. For example, the corrosion inhibiting polymers herein may prevent scale deposition on metal surfaces, such as steel (*e*.*g*., carbon steel or stainless steel) a galvanized metal, aluminum, copper, cast iron, etc.; plastic surfaces; or any other surface in a water containing system. Such scale inhibition can include applying any of the corrosion inhibiting polymer mixtures herein to a water containing system. For example, the water containing system can include one or more metal surfaces as disclosed above. In some embodiments, the corrosion (and/or scale) inhibiting polymer mixture (*e*.*g*., water source and corrosion inhibiting polymer composition) can be used to inhibit both scale deposition and corrosion. For example, in some embodiments, the corrosion inhibiting polymers disclosed herein can be used to prevent or inhibit scale formation and/or corrosion in water containing systems having more than 1 COC, such as about 1.1 COC or more.

### Working Examples 1-12 (working examples 1-5, 7-10 and 12 not according to the invention)

Various working examples were synthesized for corrosion inhibiting tests. Some of the working examples were synthesized as described below. Working examples were synthesized using active polymers.

Active polymer 1, a corrosion inhibiting (composite) polymer, was formed as described below. Deionized water (283.47g) was added to a one and a half liter reactor vessel fitted with overhead paddle stirring, a nitrogen inlet, and a condenser. The deionized water was stirred at 700 rpm, heated to 95 degrees Celsius, and purged with nitrogen gas at 1.5 L/min for 30 minutes. A solution of SPS (7.87 g) in water (20.0 g) was prepared by stirring. Four semi-batch feeds were prepared for addition to the reactor. The SPS solution was added to the reactor over 205 minutes, a 40% SMBS (171.70 g) was added to the reactor over 185 minutes, the AA (331.15 g) was added to the reactor over 180 minutes, and a 50% ATBS solution (70.30 g) was added to the reactor over 180 minutes.

Addition of the SPS and SMBS solution feeds was started. After five minutes, the AA feed and the ATBS feed were started. The AA feed, ATBS feed, and SMBS feed all finished at about the same time (about 185 minutes elapsed). The SPS feed continued for 20 minutes after the other feeds finished. After completion of the SPS feed (205 minutes elapsed), the reaction temperature was held at 95 degrees Celsius for 30 minutes and then cooled to room temperature. The resulting corrosion inhibiting polymer (working example 4) consisted of residues of AA (96.4 mol%) and ATBS (3.6 mol%), with a molecular weight of about 9,400 g/mol.

Active polymer 2, a corrosion inhibiting (composite polymer), was formed by combining 6 ppm of polymaleic acid with 9 ppm of active polymer 1.

Active polymer 3, a corrosion inhibiting (composite) polymer, was formed as described below. Deionized water (226.37 g), itaconic acid (12.00 g), and 50% sodium hydroxide solution (15.46 g) were added to a one and a half liter reactor vessel fitted with overhead paddle stirring, a nitrogen inlet, and a condenser. The deionized water, itaconic acid, and sodium hydroxide solution was stirred at 700 rpm, heated to 95 degrees Celsius, and purged with nitrogen gas at 1.5 L/min for 30 minutes. A solution of SPS (8.36 g) in water (20.0 g) was prepared by stirring. A mixture of tert-butylacrylamide (8.00 g) in AA (338.0 g) was prepared by stirring.

Four semi-batch feeds were prepared for addition to the reactor; the times of addition for each feed are as follows. The SPS solution was added to the reactor over 205 minutes, a 40% SMBS solution (182.76 g) was added to the reactor over 185 minutes, the AA/tert-butyl acrylamide mixture was added to the reactor over 180 minutes, and a 50% ATBS solution (84.06 g) was added to the reactor over 180 minutes.

Addition of the SPS and SMBS solution feeds was started. After five minutes, the AA/tert-butyl acrylamide feed and the ATBS feed were started. The AA/tert-butyl acrylamide feed, ATBS feed, and SMBS feed all finished at about the same time (about 185 minutes elapsed). The SPS feed continued for 20 minutes after the other feeds finished. After completion of the SPS feed (205 minutes elapsed), the reaction temperature was held at 95 degrees Celsius for 30 minutes and then cooled to room temperature. The resulting corrosion inhibiting polymer (active polymer 3) consisted of residues of AA (93.3 mol%), ATBS (3.7 mol%), itaconic acid (1.8 mol%), and tert-butyl acrylamide (1.2 mol%), with a molecular weight of about 14,000 g/mol.

**Table 1. Compositions of active polymers 1 and 3 (in mol%) and the corresponding molecular weights of each polymer composition. Active polymer 1 not according to the invention.**

| **Active Polymer** # | **Polymer composition (mol%)** | | | | **MW, g/mol** |
|---|---|---|---|---|---|
| | **1st Monomer** | **2nd Monomer** | **3rd Monomer** | **4th Monomer** | |
| 1 | Acrylic acid (96.4) | ATBS (3.6) | | | 18,000 |
| 3 | Acrylic acid (93.3) | ATBS (3.7) | Itaconic acid (1.8) | tert-Butyl acrylamide (1.2) | 14,000 |

Working examples were formed using one or more of active polymers 1 and 3. All working examples were dispersed in a soft water solution. The soft water solution included 100 ppm of calcium, 50 ppm of magnesium, 100 ppm of alkalinity, 200 ppm of dissolved chloride, 100 ppm of sulfate, and a pH of 8.2. Each of working examples 1-12 were mixed into the soft water solution to provide the concentrations of the components noted below in Table 2.

Working example 1 comprises 20 ppm active polymer 1. Working example 2 comprises 6 ppm (active) polymaleic acid and 9 ppm active polymer 1 (i.e. 15 ppm active polymer 2). Working example 3 comprises 20 ppm active polymer 3. Working example 4 comprises 30 ppm active polymer 3. Working example 5 includes 20 ppm of active polymer 3 and 5 ppm of active polymer 1. Working example 6 includes 20 ppm of active polymer 3, 5 ppm of active polymer 1, and 2 ppm of zinc as zinc chloride. Working example 7 includes 20 ppm of active polymer 3 and 20 ppm of hydrolyzed polymaleic acid. Working example 8 includes 20 ppm of active polymer 3 and 20 ppm of Belclene^{®} 200, a commercially available corrosion inhibitor comprising polymaleic acid and hydrolyzed polymaleic acid. Working example 9 includes 20 ppm of active polymer 3 and 20 ppm of dissolved molybdate. Working example 10 includes 20 ppm of active polymer 3 and 20 ppm of dissolved silicate. Working example 11 includes 20 ppm of active polymer 3 and 2 ppm of tin. Working example 12 includes 20 ppm of active polymer 3 and 2 ppm of cerium.

Working examples 1-5, 7-10 and 12 in table 2 are not according to the invention.

**Table 2. Components and concentrations thereof of each of working examples 1-12 in soft water. The unit 1 mpy is equal to 0.0254 mm/year.**

| **Working Example** # | **Corrosion inhibitor composition (mol%)** | | | | | | **Approx. Corrosion Rate (mpy)** |
|---|---|---|---|---|---|---|---|
| | **1st Comp.** | **Amt. of 1st Comp. active (ppm)** | **2nd Comp.** | **Amt. of 2nd Comp. active (ppm)** | **3rd Comp.** | **Amt. of 3rd Comp. active (ppm)** | |
| 1 | Active polymer 1 | 20 | | | | | ≈ 15 |
| 2 | Active polymer 1 | 9 | polymaleic acid | 6 | | | ≈ 15 |
| 3 | Active polymer 3 | 20 | | | | | 2.7 |
| 4 | Active polymer 3 | 30 | | | | | 2.0 |
| 5 | Active polymer 3 | 20 | Active polymer 1 | 5 | | | 4.0 |
| 6 | Active polymer 3 | 20 | Active polymer 1 | 5 | Zinc | 2 | 0.7 |
| 7 | Active polymer 3 | 20 | Hydrolyzed polymaleic acid | 20 | | | 3.5 |
| 8 | Active polymer 3 | 20 | Belclene^{®} 200 | 20 | | | 4.0 |
| 9 | Active polymer 3 | 20 | Molybdate | 20 | | | 3.5 |
| 10 | Active polymer 3 | 20 | Silicate | 20 | | | 3.0 |
| 11 | Active polymer 3 | 20 | Tin | 2 | | | 1.5 |
| 12 | Active polymer 3 | 20 | Cerium | 2 | | | 3.0 |

Each of working examples 1-12 were tested for corrosion inhibition under halogenation (e.g., bleach) conditions using the Gamry electrochemical instrument and related software. The Gamry electrochemical instrument and associated software measure polarization resistance over time to determine a corrosion rate versus time curve from which steady state corrosion is determined. The soft water solution was prepared for the corrosion testing. The soft water solution included 0.147 g of CaCl₂·2H₂0, 0.123 g MgSO₄·7H₂0, 0.168 g of NaHCO₃, 0.077 g of Na₂SO₄, and 0.213 g NaCl, all dissolved in one liter of deionized water. Approximately 800 ml of the soft water solution was used in a 1L round bottom glass flask and was heated using a temperature controller to 120 °F and the solution was simultaneously purged with air (very low rate). The study was done in well aerated system and the pH was maintained at 8.0-8.2 with CO₂. Throughout the study the corrosion inhibitor was dosed at 10-30 ppm as active chemical as disclosed below.

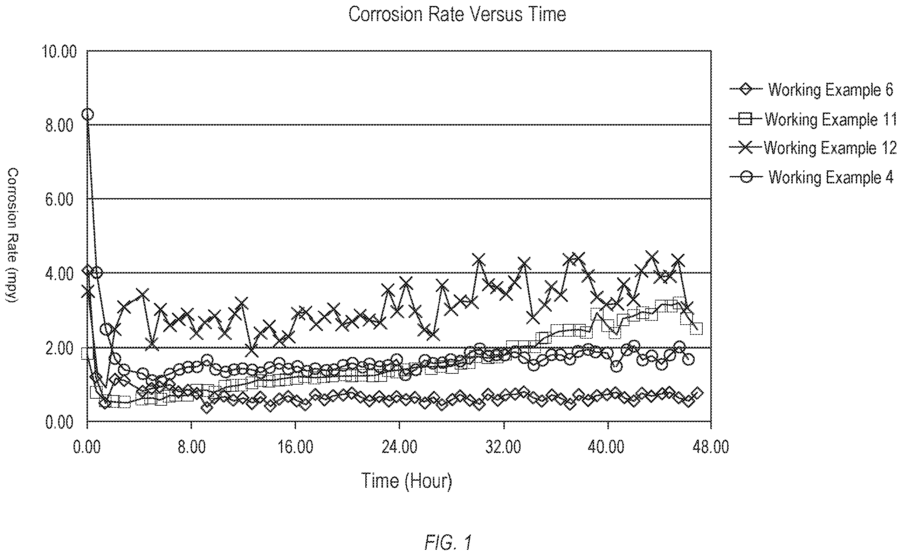

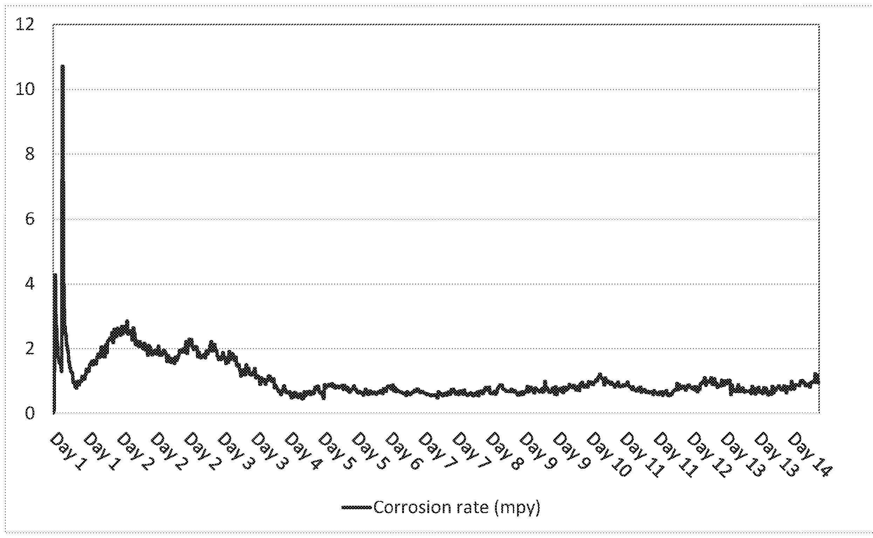

The Gamry electrochemical instrument operated through a rotary electrode principle and contained a rotating cylinder electrode, for which the rotator speed was between about 180 rpm and about 500 rpm. The experiment continued for 48 hours, during which in the first 24 hours the data was collected in an as-mixed state. Next, the oxidizing biocide (bleach) was dosed for next 24 hours. Gamry software collected the data through polarization resistance (Rp) measurements at a potential scan rate of 0.1 mV/second within 20 mV of the corrosion potential (Ecorr) from the cathodic region to the anodic region. A corrosion rate (mpy) versus time curve was plotted using the Gamry software, as shown for example in **FIG. 1**, and the steady state corrosion rate was determined with this plot.

Working example 1 exhibited a steady corrosion rate that of about 15 mpy after about 24 hours, and an average corrosion rate of about 15 mpy during a 48 hour test period. Working example 2 exhibited a steady corrosion rate of about (just under) 15 mpy during the 48 hour test period.

Working examples 3-12 exhibited an average corrosion rate below the water treatment industry standard for corrosion inhibition. Water treatment industry standards for corrosion inhibition key performance indicators (KPI) are rates that are less than about 5 mpy. Each of working examples 3-12 demonstrated corrosion inhibition rates exceeding the industry standard (KPI) as detailed below.

Working example 3 (20 ppm of tetrapolymer) exhibited an average corrosion rate of about 2.7 mpy during the 48 hour test. Working example 3 exhibited outstanding corrosion inhibition.

Working example 4 (30 ppm of tetrapolymer) exhibited an average corrosion rate of about 2.0 mpy during the 48 hour test. Working example 4 exhibited outstanding corrosion inhibition.

Working example 5 exhibited a steady corrosion rate of about 4.0 mpy (some individual intervals testing between about 4.0 mpy and about 5.0 mpy, with outliers below 4.0 mpy) after about 24 hours, and an average corrosion rate of about 4.0 mpy during the 48 hour test period.

Working example 6 (mixture of active polymer 3, active polymer 1, and zinc) exhibited outstanding corrosion inhibition with a steady corrosion rate of about 0.7 mpy during the 48 hour test period. Some of the individual intervals showed corrosion rates below 0.5 mpy.

Working example 7 exhibited a steady corrosion rate of about 3.7 mpy after about 24 hours, and an average corrosion rate of about 3.5 mpy during the 48 hour test period. Some individual intervals tested at about 4.0 mpy.

Working example 8 exhibited a steady corrosion rate of about 4.0 mpy after about 24 hours, and an average corrosion rate of about 4.0 mpy during a 48 hour test period. Some individual intervals tested above at or above 4.0 mpy.

Working example 9 exhibited a steady corrosion rate of just under 3.5 mpy during the initial 24 hours, a steady corrosion rate of just over 3.5 mpy after about 24 hours, and an average corrosion rate of about 3.5 mpy during the 48 hour test period. Some individual intervals tested above at or below about 3.0 mpy.

Working example 10 exhibited an average corrosion rate of about 3.0 mpy during the 48 hour test period.

Working example 11 (active polymer 3 and tin) exhibited outstanding corrosion inhibition, with an average corrosion rate of about 1.5 mpy.

Working example 12 (active polymer 3 and cerium) exhibited an average corrosion rate of about 3.0 mpy during the 48 hour test period.

**FIG. 1** is a graph of corrosion rate versus time for individual test runs (procedures as detailed above) of working examples 4, 6, 11, and 12 (working examples 4 and 12 in figure 1 not according to the invention). As shown in **FIG. 1**, each of working examples 4, 6, 11, and 12 demonstrated corrosion inhibition well below industry standards. Each of working examples 4, 6, 11, and 12 demonstrated excellent corrosion inhibition without phosphorous, and with large molecule (e.g., polymer) corrosion inhibitors. Working example 4 (and the working examples having active polymer 3 therein) demonstrated unexpected corrosion resistance and extent thereof. Generally, corrosion inhibitors are small molecules. The polymer compositions tested includes relatively larger polymer molecules. But expectedly, exceptional corrosion inhibition was observed with the corrosion inhibiting polymer composition despite the relatively large size of the polymers *(e.g.,* polymers that contain no phosphorous) compared to traditional corrosion inhibitors.

As shown in **FIG. 1**, an individual test run of working example 4 exhibited a steady corrosion rate of just over 1.5 mpy during the initial 24 hours, a steady corrosion rate slightly higher than in the initial 24 hours at about 2 mpy after about 24 hours, and an average corrosion rate of about just under 2.0 mpy during the 48 hour test period. The corrosion rate of working example 4 appeared to be increasing with time. As noted above, working example 6 showed the highest extent of corrosion inhibition, with an average corrosion rate of about 0.7 mpy, with some of the individual intervals of the test run in **FIG. 1** showing corrosion rates below 0.5 mpy.

With respect to **FIG. 1**, working example 11 showed an average corrosion rate of about 1.5 mpy in the test run, with a corrosion rate of less than about 1.5 mpy during the initial 24 hours, an average corrosion rate slightly higher than in the initial 24 hours at about 2.0 mpy after the initial 24 hours. Individual intervals tested between about 0.5 mpy and about 1.5 mpy during the initial 24 hours, and between about 1.5 mpy and about 3.0 mpy during the second 24 hours, with a majority testing in the range of about 1.0 mpy to about 1.5 mpy. The corrosion rate of working example 11 steadily increased throughout the 48 hour period. Working example 12 exhibited a an average corrosion rate of about 3.0 mpy with individual intervals in the test run shown in **FIG. 1** having corrosion rates between about 2.0 mpy and about 4.5 mpy. The corrosion rate of working example 12 steadily increased throughout the 48 hour period.

Working examples 3 and 4 were tested for scale inhibition. Working examples 3 and 4 demonstrated excellent scale inhibition in seawater.

### Working Example 13

In order to more fully understand the performance of anticorrosion compositions under water flow dynamics and velocity as found in industrial water process systems, compositions for scale control were applied to a pilot cooling tower. The pilot cooling tower (PCT) is used to simulate actual industrial cooling water systems.

Electric heating rods were inserted inside mild steel metal tubes placed within the interior of the PCT water recirculation system to heat the water circulating throughout the PCT. Metal coupons and corrator probes (Nalco Corrosion Monitor, or NCM, available from Nalco Water of Naperville, IL) of mild steel metallurgy were placed in a coupon rack immersed within the water recirculation loop in order to subject them to the corrosion conditions within the loop.

To fill the recirculation loop, 200 L of synthetic soft water was applied to the loop. Synthetic soft water was prepared by combining deionized water with 0.147 g/liter of CaCl₂·2H₂0, 0.123 g/liter MgSO₄·7H₂0, 0.168 g of NaHCO₃, 0.077 g/liter of Na₂SO₄, and 0.213 g/liter NaCl. The soft water was recirculated for a period of time sufficient to reach constant conditions of 23 liters recirculation per minute at a return temperature of 45 °C±4 °C and pH of 8.2±0.1. Then 30 ppm of active polymer 3 and 2 ppm zinc ions (as zinc chloride) were added separately to the PCT through the PCT dosing pumps and the dosed water was recirculated through the cooling tower recirculation system using a pump for 4 cycles of concentration, corresponding to a duration of 14 days, under the conditions recited above. At the end of the recirculation period, the metal coupons and corrator probes were removed and analyzed for corrosion.

The combination of 30 ppm active polymer 3 with 2 ppm zinc exhibited outstanding corrosion inhibition as shown in FIG. 2. Thus, the excellent performance of active polymer 3, further in the presence of zinc, was reproduced in the PCT system based on the prediction of good performance in working examples 1-12. It will be recognized that various modifications and changes may be made without following the example embodiments and applications illustrated and described herein, and without departing from the scope of the claims.

## Claims

1. A corrosion inhibiting mixture without phosphorous or phosphorous containing compounds comprising:
a water source; and
0.05 ppm to 200 ppm by weight of a polymer composition dispersed in the water source, the polymer composition comprising the residues of 90 mol% to 97 mol% of a first monomer, 0.01 mol% to 5 mol% of a second monomer that is chemically different from the first monomer, and 0.01 mol% to 5 mol% of a third monomer that is chemically different from the first and second monomers,
wherein the first monomer is acrylic acid, a salt thereof, or a conjugate base thereof; maleic acid, a salt thereof, or a conjugate base thereof; or methacryiic acid, a salt thereof, or a conjugate base thereof,
the second monomer is 2-acrylamido-2-methylpropane sulfonic acid, a salt thereof, or a conjugate base thereof; maleic acid, a salt thereof, or a conjugate base thereof; methacrylic acid, a salt thereof, or a conjugate base thereof;
methallyl sulfonate; or sulfostyrene; and
the third monomer is 2-acrylamido-2-methylpropane sulfonic acid, a salt thereof, or a conjugate base thereof; itaconic acid, a salt thereof, or a conjugate base thereof; crotonic acid, a salt thereof, or a conjugate base thereof; tert-butylacrylamide; or dimethylacrylamide;
further comprising 0.05 ppm to 10 ppm of one or more of zinc, or tin.

2. The corrosion inhibiting mixture of claim 1, wherein the polymer composition further comprises 0.01 mol% to 5 mol% of a fourth monomer, wherein the fourth monomer is chemically different from the first monomer, the second monomer, and the third monomer; and wherein the fourth monomer is itaconic acid, a salt thereof, or a conjugate base thereof; crotonic acid, a salt thereof, or a conjugate base thereof; tert-butylacrylamide; or dimethylacrylamide.

3. The corrosion inhibiting mixture of claim 2 wherein the polymer composition further comprises 0.01 mol% to 5 mol% of methacrylic acid, a salt thereof, or a conjugate base thereof; wherein the methacrylic acid, salt thereof, or conjugate base thereof is chemically different from the first monomer, the second monomer, the third monomer, and the fourth monomer.

4. The corrosion inhibiting mixture of any one of claims 1-3 wherein the second monomer is 2-acrylamido-2-methylpropane sulfonic acid or a conjugate base thereof.

5. The corrosion inhibiting mixture of any one of claims 1-4 wherein the first monomer is acrylic acid or a conjugate base thereof.

6. The corrosion inhibiting mixture of any one of claims 1-5 wherein the third monomer is itaconic acid or a conjugate base thereof.

7. The corrosion inhibiting mixture of any one of claims 2-6 wherein the fourth monomer is tert-butylacrylamide.

8. The corrosion inhibiting mixture of any one of claims 1-7, wherein the polymer composition comprises 93 mol% to 94 mol% acrylic acid, 3 mol% to 4 mol% 2-acrylamido-2-methylpropane sulfonic acid or a conjugate base thereof, 1 mol% to 2 mol% itaconic acid or a conjugate base thereof, and 1 mol% to 2 mol% tert-butylacrylamide.

9. The corrosion inhibiting mixture of any one of claims 1-8 wherein the water source comprises fresh water, soft water, balanced water, high-chloride/sulfate water, sea water, produced water, municipal water, brackish water, a synthetic version of any of the foregoing, or combinations of any of the foregoing, further wherein the water source comprises a corrodent.

10. A method of inhibiting corrosion in water containing systems without the use of phosphorous or phosphorous containing compounds, the method comprising:
adding 0.05 ppm to 200 ppm of a corrosion inhibiting polymer composition to a water source to form a corrosion inhibiting polymer mixture, the corrosion inhibiting polymer composition comprising the residues of 90 mol% to 97 mol% of a first monomer, 0.01 mol% to 5 mol% of a second monomer that is chemically different from the first monomer, and 0.01 mol% to 5 mol% of a third monomer that is chemically different from the first and second monomers, wherein the first monomer is acrylic acid, a salt thereof, or a conjugate base thereof; maleic acid, a salt thereof, or a conjugate base thereof; or methacrylic acid, a salt thereof, or a conjugate base thereof, the second monomer is 2- acrylamido-2 -methylpropane sulfonic acid, a salt thereof, or a conjugate base thereof; maleic acid, a salt thereof, or a conjugate base thereof; methacrylic acid, a salt thereof, or a conjugate base thereof; methallyl sulfonate; or sulfostyrene; and the third monomer is 2-acrylamido-2- methylpropane sulfonic acid, a salt thereof, or a conjugate base thereof; itaconic acid, a salt thereof, or a conjugate base thereof;
crotonic acid, a salt thereof, or a conjugate base thereof; tert-butylacrylamide; or
dimethylacrylamide; and
applying the corrosion inhibiting polymer mixture to a water source within a water containing system;
wherein the corrosion inhibiting polymer mixture further comprises 0.05 ppm to 10 ppm of one or more of zinc, or tin.

11. The method of claim 10 wherein the water containing system includes one or more of a cooling tower, a radiator, one or more pipes, a water jacket, a desalination membrane, a condenser, an evaporator, a pump, or a storage vessel.

12. The method of any one of claims 10-11 wherein the applying includes recirculating for at least one cycle of concentration.

13. The use of the corrosion inhibiting mixture of any one of claims 1-9 to inhibit corrosion in a water containing system.

## Patentansprüche

1. Korrosionshemmende Mischung ohne Phosphor oder phosphorhaltige Verbindungen, die Folgendes umfasst:
eine Wasserquelle; und
0,05 Gew.-ppm bis 200 Gew.-ppm einer in der Wasserquelle dispergierten Polymerzusammensetzung, wobei die Polymerzusammensetzung die Reste von 90 Mol-% bis 97 Mol-% eines ersten Monomers, 0,01 Mol-% bis 5 Mol-% eines zweiten Monomers, das von dem ersten Monomer chemisch unterschiedlich ist, und 0,01 Mol-% bis 5 Mol-% eines dritten Monomers, das von dem ersten und dem zweiten Monomer chemisch unterschiedlich ist, umfasst, wobei das erste Monomer Acrylsäure, ein Salz davon oder eine konjugierte Base davon; Maleinsäure, ein Salz davon oder eine konjugierte Base davon; oder Methacrylsäure, ein Salz davon oder eine konjugierte Base davon ist,
das zweite Monomer 2-Acrylamido-2-methylpropansulfonsäure, ein Salz davon oder eine konjugierte Base davon; Maleinsäure, ein Salz davon oder eine konjugierte Base davon;
Methacrylsäure, ein Salz davon oder eine konjugierte Base davon; Methallylsulfonat; oder
Sulfostyrol ist; und
das dritte Monomer 2-Acrylamido-2-methylpropansulfonsäure, ein Salz davon oder eine konjugierte Base davon; Itaconsäure, ein Salz davon oder eine konjugierte Base davon;
Crotonsäure, ein Salz davon oder eine konjugierte Base davon; tert-Butylacrylamid; oder
Dimethylacrylamid ist;
die ferner 0,05 ppm bis 10 ppm Zink und/oder Zinn umfasst.

2. Korrosionshemmende Mischung nach Anspruch 1, wobei die Polymerzusammensetzung ferner 0,01 Mol-% bis 5 Mol-% eines vierten Monomers umfasst, wobei das vierte Monomer von dem ersten Monomer, dem zweiten Monomer und dem dritten Monomer chemisch unterschiedlich ist; und wobei das vierte Monomer Itaconsäure, ein Salz davon oder eine konjugierte Base davon; Crotonsäure, ein Salz davon oder eine konjugierte Base davon; tert-Butylacrylamid; oder Dimethylacrylamid ist.

3. Korrosionshemmende Mischung nach Anspruch 2, wobei die Polymerzusammensetzung ferner 0,01 Mol-% bis 5 Mol-% Methacrylsäure, ein Salz davon oder eine konjugierte Base davon umfasst; wobei die Methacrylsäure, das Salz davon oder die konjugierte Base davon von dem ersten Monomer, dem zweiten Monomer, dem dritten Monomer und dem vierten Monomer chemisch unterschiedlich ist.

4. Korrosionshemmende Mischung nach einem der Ansprüche 1-3, wobei das zweite Monomer 2-Acrylamido-2-methylpropansulfonsäure oder eine konjugierte Base davon ist.

5. Korrosionshemmende Mischung nach einem der Ansprüche 1-4, wobei das erste Monomer Acrylsäure oder eine konjugierte Base davon ist.

6. Korrosionshemmende Mischung nach einem der Ansprüche 1-5, wobei das dritte Monomer Itaconsäure oder eine konjugierte Base davon ist.

7. Korrosionshemmende Mischung nach einem der Ansprüche 2-6, wobei das vierte Monomer tert-Butylacrylamid ist.

8. Korrosionshemmende Mischung nach einem der Ansprüche 1-7, wobei die Polymerzusammensetzung 93 Mol-% bis 94 Mol-% Acrylsäure, 3 Mol-% bis 4 Mol-% 2-Acrylamido-2-methylpropansulfonsäure oder eine konjugierte Base davon, 1 Mol-% bis 2 Mol-% Itaconsäure oder eine konjugierte Base davon und 1 Mol-% bis 2 Mol-% tert-Butylacrylamid umfasst.

9. Korrosionshemmende Mischung nach einem der Ansprüche 1-8, wobei die Wasserquelle Süßwasser, weiches Wasser, ausgewogenes Wasser, Wasser mit hohem Chlorid-/Sulfatgehalt, Meerwasser, produziertes Wasser, Stadtwasser, Brackwasser, eine synthetische Version von beliebigem des Vorhergehenden oder Kombinationen von beliebigem des Vorhergehenden umfasst, wobei die Wasserquelle ferner ein Korrosionsmittel umfasst.

10. Verfahren zum Hemmen von Korrosion in wasserhaltigen Systemen ohne die Verwendung von Phosphor oder phosphorhaltigen Verbindungen, wobei das Verfahren Folgendes umfasst: Zugeben von 0,05 ppm bis 200 ppm einer korrosionshemmenden Polymerzusammensetzung zu einer Wasserquelle, um eine korrosionshemmende Polymermischung auszubilden, wobei die korrosionshemmende Polymerzusammensetzung die Reste von 90 Mol-% bis 97 Mol-% eines ersten Monomers, 0,01 Mol-% bis 5 Mol-% eines zweiten Monomers, das von dem ersten Monomer chemisch unterschiedlich ist, und 0,01 Mol-% bis 5 Mol-% eines dritten Monomers, das von dem ersten und dem zweiten Monomer chemisch unterschiedlich ist, umfasst, wobei das erste Monomer Acrylsäure, ein Salz davon oder eine konjugierte Base davon; Maleinsäure, ein Salz davon oder eine konjugierte Base davon; oder Methacrylsäure, ein Salz davon oder eine konjugierte Base davon ist, das zweite Monomer 2-Acrylamido-2-methylpropansulfonsäure, ein Salz davon oder eine konjugierte Base davon; Maleinsäure, ein Salz davon oder eine konjugierte Base davon; Methacrylsäure, ein Salz davon oder eine konjugierte Base davon; Methallylsulfonat; oder Sulfostyrol ist; und das dritte Monomer 2-Acrylamido-2-methylpropansulfonsäure, ein Salz davon oder eine konjugierte Base davon; Itaconsäure, ein Salz davon oder eine konjugierte Base davon; Crotonsäure, ein Salz davon oder eine konjugierte Base davon; tert-Butylacrylamid; oder Dimethylacrylamid ist; und Anwenden der korrosionshemmenden Polymermischung an einer Wasserquelle innerhalb eines wasserhaltigen Systems; wobei die korrosionshemmende Polymermischung ferner 0,05 ppm bis 10 ppm Zink und/oder Zinn umfasst.

11. Verfahren nach Anspruch 10, wobei das wasserhaltige System einen Kühlturm, einen Heizkörper, ein oder mehrere Rohre, einen Wassermantel, eine Entsalzungsmembran, einen Kondensator, einen Verdampfer, eine Pumpe und/oder einen Speicherbehälter beinhaltet.

12. Verfahren nach einem der Ansprüche 10-11, wobei das Anwenden ein Rezirkulieren für wenigstens einen Konzentrationszyklus beinhaltet.

13. Verwendung der korrosionshemmenden Mischung nach einem der Ansprüche 1-9, um Korrosion in einem wasserhaltigen System zu hemmen.

## Revendications

1. Mélange inhibiteur de corrosion sans phosphore ou composé contenant du phosphore comprenant :
une source d'eau ; et
0,05 ppm à 200 ppm en poids d'une composition polymère dispersée dans la source d'eau, la composition polymère comprenant les résidus de 90 % en moles à 97 % en moles d'un premier monomère, 0,01 % en moles à 5 % en moles d'un deuxième monomère chimiquement différent du premier monomère, et 0,01 % en moles à 5 % en moles d'un troisième monomère qui est chimiquement différent des premier et deuxième monomères,
le premier monomère étant l'acide acrylique, un sel de celui-ci ou une base conjuguée de celui-ci ; l'acide maléique, un sel de celui-ci ou une base conjuguée de celui-ci ; ou l'acide méthacrylique, un sel de celui-ci ou une base conjuguée de celui-ci,
le deuxième monomère étant l'acide 2-acrylamido-2-méthylpropane sulfonique, un sel de celui-ci ou une base conjuguée de celui-ci ; l'acide maléique, un sel de celui-ci ou une base conjuguée de celui-ci ; l'acide méthacrylique, un sel de celui-ci ou une base conjuguée de celui-ci ; sulfonate de méthallyle ; ou sulfostyrène ; et
le troisième monomère étant l'acide 2-acrylamido-2-méthylpropane sulfonique, un sel de celui-ci ou une base conjuguée de celui-ci ; l'acide itaconique, un sel de celui-ci ou une base conjuguée de celui-ci ; l'acide crotonique, un sel de celui-ci ou une base conjuguée de celui-ci ; tert-butylacrylamide ; ou diméthylacrylamide ;
comprenant en outre 0,05 ppm à 10 ppm de zinc et/ou d'étain.

2. Mélange inhibiteur de corrosion selon la revendication 1, la composition polymère comprenant en outre 0,01 % en moles à 5 % en moles d'un quatrième monomère, le quatrième monomère étant chimiquement différent du premier monomère, du deuxième monomère et du troisième monomère ; et le quatrième monomère étant l'acide itaconique, un sel de celui-ci ou une base conjuguée de celui-ci ; l'acide crotonique, un sel de celui-ci ou une base conjuguée de celui-ci ; tert-butylacrylamide ; ou diméthylacrylamide.

3. Mélange inhibiteur de corrosion selon la revendication 2, la composition polymère comprenant en outre 0,01 % en moles à 5 % en moles d'acide méthacrylique, d'un sel de celui-ci ou d'une base conjuguée de celui-ci ; l'acide méthacrylique, un sel de celui-ci ou une base conjuguée de celui-ci étant chimiquement différent du premier monomère, du deuxième monomère, du troisième monomère et du quatrième monomère.

4. Mélange inhibiteur de corrosion selon l'une quelconque des revendications 1 à 3, le deuxième monomère étant l'acide 2-acrylamido-2-méthylpropane sulfonique ou une base conjuguée de celui-ci.

5. Mélange inhibiteur de corrosion selon l'une quelconque des revendications 1 à 4, le premier monomère étant l'acide acrylique ou une base conjuguée de celui-ci.

6. Mélange inhibiteur de corrosion selon l'une quelconque des revendications 1 à 5, le troisième monomère étant l'acide itaconique ou une base conjuguée de celui-ci.

7. Mélange inhibiteur de corrosion selon l'une quelconque des revendications 2 à 6, le quatrième monomère étant tert-butylacrylamide.

8. Mélange inhibiteur de corrosion selon l'une quelconque des revendications 1 à 7, la composition polymère comprenant 93 % en moles à 94 % en moles d'acide acrylique, 3 % en moles à 4 % en moles d'acide 2-acrylamido-2-méthylpropane sulfonique ou une base conjuguée de celui-ci, 1 % en mole à 2 % en mole d'acide itaconique ou une base conjuguée de celui-ci, et 1 % en mole à 2 % en mole de tert-butylacrylamide.

9. Mélange inhibiteur de corrosion selon l'une quelconque des revendications 1 à 8, la source d'eau comprenant de l'eau douce, de l'eau équilibrée, de l'eau à haute teneur en chlorure/sulfate, de l'eau de mer, de l'eau produite, de l'eau municipale, de l'eau saumâtre, une version synthétique de l'une quelconque des eaux précédentes, ou des combinaisons de l'une quelconque des eaux précédentes, en outre la source d'eau comprenant un corrosif.

10. Procédé d'inhibition de la corrosion dans des systèmes contenant de l'eau sans l'utilisation de phosphore ou de composés contenant du phosphore, le procédé comprenant : l'ajout de 0,05 ppm à 200 ppm d'une composition polymère inhibiteur de corrosion à une source d'eau pour former un mélange polymère inhibiteur de corrosion, la composition polymère inhibiteur de corrosion comprenant les résidus de 90 % en moles à 97 % en moles d'un premier monomère, 0,01 % en moles à 5 % en moles d'un deuxième monomère qui est chimiquement différent du premier monomère, et 0,01 % en moles à 5 % en moles d'un troisième monomère qui est chimiquement différent des premier et deuxième monomères, le premier monomère étant l'acide acrylique, un sel de celui-ci ou une base conjuguée de celui-ci ; l'acide maléique, un sel de celui-ci ou une base conjuguée de celui-ci ; ou l'acide méthacrylique, un sel de celui-ci ou une base conjuguée de celui-ci, le deuxième monomère étant l'acide 2-acrylamido-2-méthylpropane sulfonique, un sel de celui-ci ou une base conjuguée de celui-ci ; l'acide maléique, un sel de celui-ci ou une base conjuguée de celui-ci ; l'acide méthacrylique, un sel de celui-ci ou une base conjuguée de celui-ci ; sulfonate de méthallyle ; ou sulfostyrène ; et le troisième monomère étant l'acide 2-acrylamido-2-méthylpropane sulfonique, un sel de celui-ci ou une base conjuguée de celui-ci ; l'acide itaconique, un sel de celui-ci ou une base conjuguée de celui-ci ; l'acide crotonique, un sel de celui-ci ou une base conjuguée de celui-ci ; tert-butylacrylamide ; ou diméthylacrylamide ; et
l'application du mélange polymère inhibiteur de corrosion à une source d'eau dans un système contenant de l'eau ;
le mélange polymère inhibiteur de corrosion comprenant en outre 0,05 ppm à 10 ppm de zinc et/ou d'étain.

11. Procédé selon la revendication 10, le système contenant de l'eau comportant une tour de refroidissement et/ou un radiateur et/ou un ou plusieurs tuyaux et/ou une chemise d'eau et/ou une membrane de dessalement et/ou un condenseur et/ou un évaporateur et/ou une pompe et/ou un réservoir de stockage.

12. Procédé selon l'une quelconque des revendications 10 à 11, l'application comportant la recirculation pendant au moins un cycle de concentration.

13. Utilisation du mélange inhibiteur de corrosion selon l'une quelconque des revendications 1 à 9 pour inhiber la corrosion dans un système contenant de l'eau.
